(19) Europäisches Patentamt / European Patent Office / Office européen des brevets

(11) **EP 4 304 042 B1**

(12) **EUROPEAN PATENT SPECIFICATION**

(45) Date of publication and mention
of the grant of the patent:
**17.06.2026 Bulletin 2026/25**

(21) Application number: **21935567.4**

(22) Date of filing: **09.04.2021**

(51) International Patent Classification (IPC):
*H02J 7/54* *(2026.01)*   *H01M 10/44* *(2006.01)*
*H02J 3/32* *(2026.01)*   *H02J 7/90* *(2026.01)*

(52) Cooperative Patent Classification (CPC):
**H02J 7/54; H01M 10/44; H01M 10/441; H02J 3/32;**
H02J 7/933; H02J 7/971; H02J 2101/24;
Y02E 70/30

(86) International application number:
**PCT/CN2021/086070**

(87) International publication number:
**WO 2022/213338 (13.10.2022 Gazette 2022/41)**

(54) **ENERGY STORAGE SYSTEM AND CONTROL METHOD FOR ENERGY STORAGE SYSTEM**

ENERGIESPEICHERSYSTEM UND STEUERUNGSVERFAHREN FÜR
ENERGIESPEICHERSYSTEM

SYSTÈME DE STOCKAGE D'ÉNERGIE ET PROCÉDÉ DE COMMANDE POUR SYSTÈME DE
STOCKAGE D'ÉNERGIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**10.01.2024 Bulletin 2024/02**

(73) Proprietor: **Huawei Digital Power Technologies
Co., Ltd.
Shenzhen, Guangdong 518043 (CN)**

(72) Inventors:
• **LI, Lin**
 **Shenzhen, Guangdong 518129 (CN)**
• **WU, Zhipeng**
 **Shenzhen, Guangdong 518129 (CN)**
• **YU, Bo**
 **Shenzhen, Guangdong 518129 (CN)**

(74) Representative: **Gill Jennings & Every LLP
The Broadgate Tower
20 Primrose Street
London EC2A 2ES (GB)**

(56) References cited:
EP-B1- 2 980 954      CN-A- 102 856 942
CN-A- 104 953 659     CN-B- 108 155 657
US-A1- 2018 123 357

## Description

## TECHNICAL FIELD

This application relates to the field of power supply technologies, and in particular, to an energy storage system and a method for controlling an energy storage system.

## BACKGROUND

As energy shortage and environmental pollution are aggravated in the modern society, currently, power generation manners such as photovoltaic power generation and wind power generation have been applied to a large scale. Characteristics of fluctuation and an uncertainty of such new energy are increasingly prominent, and it is hard to meet requirements of continuous power supply on a user side. However, as electrochemical cell technologies develop and a production capacity sharply increases, costs of electrochemical cells decrease, thereby bringing an opportunity for the electrochemical cells to participate in electric power energy storage of new energy power generation systems. In addition, because an energy storage system that uses an electrochemical cell has characteristics such as flexibility, controllability of charging and discharging, a quick response capability, and high energy density, the energy storage system that uses an electrochemical cell is gradually widely applied on a power generation side.

The energy storage system that uses an electrochemical cell is added on the power generation side, so that surplus electric energy that is not consumed in a period of a high energy yield or low power consumption may be stored, and may be discharged in a period of a low energy yield or high power consumption, so that power generation tends to be stable and a shock on an alternating current power grid is reduced.

In the energy storage system that uses an electrochemical cell, to increase a backup capacity and adapt to a voltage level requirement of a power generation system, a plurality of battery packs are generally connected in series to form a battery cluster with a high voltage and a large capacity. Each battery pack includes a plurality of battery cells connected in series or connected in a serial and parallel connection manner. Because states of health (State of Health, SOH) or original states of charge (State of Charge, SOC) of the batteries are different, electricity quantities of the battery packs are unbalanced. Consequently, time periods for fully charging or discharging the battery packs is different. Specifically, when a plurality of battery packs are connected in series to form a battery cluster, because currents of all the battery packs are the same, a total current of the battery cluster needs to be limited based on a minimum current of the battery pack. Consequently, a battery pack with a higher remaining electricity quantity cannot be fully discharged, and a battery pack with a lower remaining electricity quantity cannot be fully charged. Therefore, the electricity quantity of the battery pack cannot be fully used, thereby limiting the current of the battery cluster, and wasting the electricity quantity. Other previously proposed arrangements are disclosed in US 2018/123357 A1, CN 108155657 B, and EP 2980954 B1.

## SUMMARY

This application provides an energy storage system, a method for controlling an energy storage system, and a photovoltaic power generation system, so that electricity quantities of battery packs can be balanced, thereby reducing impact on a current of a battery cluster, and further reducing a waste of the electricity quantity. The invention is defined by the independent claims.

According to a first aspect, this application provides an energy storage system. The energy storage system is applied to a new energy power generation scenario. An output end of the energy storage system is connected to an alternating current power grid, so that surplus electric energy that is not consumed in a period of a high energy yield or low power consumption may be stored, and may be discharged in a period of a low energy yield or high power consumption, to reduce a shock on the alternating current power grid. The energy storage system includes a battery cluster, a power conversion circuit, and a controller. An output end of the battery cluster is connected to a first terminal of the power conversion circuit, and a second terminal of the power conversion circuit is connected to the output end of the energy storage system. The power conversion circuit is configured to: convert a direct current provided by the battery cluster into an alternating current and then transmit the alternating current to the alternating current power grid, or convert an alternating current obtained from the second terminal of the power conversion circuit into a direct current for charging the battery cluster. When the power conversion circuit charges the battery cluster, the alternating current may be provided by the alternating current power grid, or may be provided by a new energy power generation device. Each battery cluster includes at least two energy storage modules connected in series, each energy storage module includes one bypass circuit and one battery pack, each battery pack includes a plurality of batteries, and the plurality of batteries in the battery pack may be connected in series or in a serial and parallel connection manner. The controller controls each bypass circuit based on a first parameter value of each battery pack, so that electricity quantities of battery packs are balanced. The power conversion circuit includes a direct current/direct current conversion circuit and a direct current/alternating current conversion circuit. A first terminal of the direct current/direct current conversion circuit is the first terminal of the power conversion circuit, a second terminal of the direct current/direct current conversion circuit is connected to a first terminal of the direct current/alternating current conversion circuit, and a second terminal of the direct current/alternating current conversion circuit is the second terminal of the power conversion circuit. The direct current/direct current conversion circuit is configured to: perform direct current conversion on the direct current provided by the battery cluster and then transmit a direct current obtained through direct current conversion to the direct current/alternating current conversion circuit, or perform direct current conversion on a direct current provided by the direct current/alternating current conversion circuit and then transmit a direct current obtained through direct current conversion to the battery cluster. The direct current/alternating current conversion circuit is configured to: convert a direct current provided by the direct current/direct current conversion circuit into an alternating current, or convert the obtained alternating current into a direct current and then transmit the direct current to the direct current/direct current conversion circuit. The controller is further configured to: before bypassing the battery pack or connecting to the battery pack, control the direct current/direct current conversion circuit to stop working; and after the battery pack is bypassed or connected, control the direct current/direct current conversion circuit to resume working.

Based on the energy storage system provided in this application, each battery pack in the battery cluster is correspondingly connected to one bypass circuit, and the controller controls each bypass circuit based on the first parameter value of each battery pack, so that the battery pack can be bypassed from the battery cluster. When the battery cluster is charged, the bypassed battery pack first stops being charged. As the battery packs are gradually bypassed, electricity quantities of the battery packs in the battery cluster are synchronized. When the battery cluster is discharged, the bypassed battery pack first stops being discharged. As the battery packs are gradually bypassed, the electricity quantities of the battery packs in the battery cluster are also synchronized. However, after the battery pack is bypassed, a remaining battery pack can still be charged or discharged with a maximum current. Therefore, a current of the battery cluster can remain unchanged. To sum up, the energy storage system can balance the electricity quantities of the battery packs, thereby reducing impact on the current of the battery cluster, and further reducing a waste of the electricity quantity. In addition, because the electricity quantities of the battery packs are balanced, maximum backup duration is further implemented.

The controller may be an application-specific integrated circuit (Application-Specific Integrated Circuit, ASIC), a programmable logic device (Programmable Logic Device, PLD), a digital signal processor (Digital Signal Processor, DSP), or a combination thereof. The PLD may be a complex programmable logic device (Complex Programmable Logic Device, CPLD), a field programmable gate array (Field programmable Gate Array, FPGA), generic array logic (Generic Array Logic, GAL), or any combination thereof.

The controller may be a one-level controller or a multi-level controller. When the controller is a multi-level controller, an upper-level controller may control a lower-level controller, and there may be a plurality of lower-level controllers. The multi-level controller may be integrated on a printed circuit board (Printed circuit board, PCB), or may be physically divided into a plurality of parts and separately disposed on PCBs at different positions of the energy storage system. The parts cooperate to implement a control function.

In a possible implementation, the controller is specifically configured to: control, when the battery cluster is charged, each bypass circuit to bypass a battery pack whose first parameter value is greater than or equal to a first preset parameter value, where in this case, a remaining battery pack continues being charged; or control, when the battery cluster is discharged, each bypass circuit to bypass a battery pack whose first parameter value is less than or equal to a second preset parameter value, where in this case, a remaining battery pack continues being discharged. After the battery pack is bypassed, the remaining battery pack can still be charged or discharged with a maximum current. Therefore, the current of the battery cluster can remain unchanged.

In a possible implementation, the bypass circuit includes a first controllable switch and a second controllable switch. A positive output end of the battery pack is connected to a first end of the first controllable switch, a second end of the first controllable switch is connected to a first end of the second controllable switch and a positive output end of the energy storage module, a second end of the second controllable switch is connected to a negative output end of a battery pack, and a negative output end of the battery pack is connected to a negative output end of the energy storage module.

In a possible implementation, the controller is specifically configured to: first control both the first controllable switch and the second controllable switch to be open; and after a first preset time, control the second controllable switch to be closed, to bypass the battery pack. When both the first controllable switch and the second controllable switch are power switch devices, the first preset time is greater than or equal to a dead time of the first controllable switch, to avoid a short circuit between the positive output end and the negative output end of the battery pack caused by simultaneous closure of the first controllable switch and the second controllable switch.

In a possible implementation, the controller is specifically configured to: when the battery cluster is charged, sequentially bypass battery packs whose first parameter values are greater than or equal to the first preset parameter value, until only one remaining battery pack is not bypassed. It indicates that charging of the battery cluster is completed in this case, and that the only remaining battery pack is no longer bypassed. The controller is specifically configured to: when the battery cluster is discharged, sequentially bypass battery packs whose first parameter values are less than or equal to the second preset parameter value, until only one remaining battery pack is not bypassed. It indicates that discharging of the battery cluster is completed in this case, and that the only remaining battery pack is no longer bypassed.

In a possible implementation, the controller is further configured to: control each bypass circuit when the battery cluster is charged and a first parameter value of the only one remaining battery pack is greater than or equal to the first preset parameter value, so that the bypassed battery pack reconnects to the battery cluster; or control each bypass circuit when the battery cluster is discharged and the first parameter value of the only one remaining battery pack is less than or equal to the second preset parameter value, so that the bypassed battery pack reconnects to the battery cluster.

In a possible implementation, the controller is specifically configured to: first control both the first controllable switch and the second controllable switch to be open; and after a second preset time, control the first controllable switch to be closed, so that the battery pack reconnects to the battery cluster. When both the first controllable switch and the second controllable switch are power switch devices, the second preset time is greater than or equal to a dead time of the second controllable switch, to avoid a short circuit between the positive output end and the negative output end of the battery pack caused by simultaneous closure of the first controllable switch and the second controllable switch.

In a possible implementation, the energy storage system further includes a soft-start circuit, where a positive port of the output end of the battery cluster is connected to a positive port of the first terminal of the direct current/direct current conversion circuit through the soft-start circuit, or a negative port of the output end of the battery cluster is connected to a negative port of the first terminal of the direct current/direct current conversion circuit through the soft-start circuit. The soft-start circuit includes a first relay, a second relay, and a first resistor. The first relay is connected to the first resistor in series and then connected to the second relay in parallel. The controller is further configured to: before bypassing the battery pack or connecting to the battery pack, control the first relay and the second relay to be open.

In a possible implementation, the controller is further configured to: after completing bypassing or connecting to the battery pack, control a voltage at the first terminal of the direct current/direct current conversion circuit to be equal to an output voltage of the battery cluster, and control the second relay to be closed. A bus capacitor is usually disposed at the first terminal of the direct current/direct current conversion circuit. The controller controls the voltage at the first terminal of the direct current/direct current conversion circuit to be equal to the output voltage of the battery cluster, so that a voltage of the bus capacitor is equal to the output voltage of the battery cluster; and controls the second relay to be closed. In this case, the voltage of the bus capacitor causes no shock on the battery cluster, thereby protecting the battery cluster.

In a possible implementation, the controller is further configured to: after completing bypassing or connecting to the battery pack, control the first relay to be closed and the second relay to be open; and after a third preset time, control the first relay to be open and the second relay to be closed.

The third preset time is set, so that charging and discharging are performed between the first terminal of the direct current/direct current conversion circuit and the output end of the battery cluster after current limiting is performed by using the first relay and the first resistor, to achieve potential equalization, thereby reducing a shock on the battery cluster.

In a possible implementation, the controller includes a first controller and at least two second controllers. The second controllers are connected to battery packs in a one-to-one correspondence. The second controller is configured to: obtain a second parameter value of the corresponding battery pack and send the second parameter value to the first controller. The first controller is configured to: determine first parameter values of all the battery packs based on second parameter values of all the battery packs; when the battery cluster is charged, determine the battery pack whose first parameter value is greater than or equal to the first preset parameter value as a to-be-bypassed battery pack; or when the battery cluster is discharged, determine the battery pack whose first parameter value is less than or equal to the second preset parameter value as a to-be-bypassed battery pack; and send a control instruction to the second controller. The control instruction is used to instruct the corresponding second controller to control the bypass circuit to bypass the to-be-bypassed battery pack.

The second controller is a battery monitoring unit (Battery Monitoring Unit, BMU), and the first controller is a battery control unit (Battery Control Unit, BCU).

In a possible implementation, the second parameter value includes a total capacity, a state of energy SOE value, and a state of health SOH value of the battery pack, and the first parameter value is a state of charge SOC value.

In a possible implementation, the controller includes a first controller and at least two second controllers. The second controllers are connected to battery packs in a one-to-one correspondence. The second controller obtains a first parameter value of the corresponding battery pack and sends the first parameter value to the first controller.

When the battery cluster is charged, the first controller determines the battery pack whose first parameter value is greater than or equal to the first preset parameter value as a to-be-bypassed battery pack; or when the battery cluster is discharged, determines the battery pack whose first parameter value is less than or equal to the second preset parameter value as a to-be-bypassed battery pack; and sends a control instruction to the second controller. The control instruction is used to instruct the corresponding second controller to control the bypass circuit to bypass the to-be-bypassed battery pack.

In a possible implementation, the first parameter value is a voltage value or a state of charge SOC value.

According to a second aspect, this application further provides a method for controlling an energy storage system. The method is applied to the energy storage system provided in the foregoing implementation, and includes:

controlling each bypass circuit based on a first parameter value of each battery pack, so that electricity quantities of battery packs are balanced;
before bypassing the battery pack or connecting to the battery pack, controlling the direct current/direct current conversion circuit to stop working; and
after completing bypassing or connecting to the battery pack, controlling a voltage at the first terminal of the direct current/direct current conversion circuit to be equal to an output voltage of the battery cluster, and controlling the direct current/direct current conversion circuit to start working.

Based on the foregoing control method, the electricity quantities of the battery packs can be balanced. After a fully charged or discharged battery pack is cut off, another battery pack can still be charged or discharged with a maximum current, thereby reducing impact on a current of a battery cluster. In addition, because the electricity quantities of the battery packs are balanced, maximum backup duration is further implemented. In addition, when it is determined that a battery is abnormal, a bypass circuit may be controlled to bypass a battery pack in which the abnormal battery is located, to rectify a fault, and ensure that a remaining battery pack can continue to normally run.

In a possible implementation, the controlling each bypass circuit based on a first parameter value of each battery pack specifically includes:

controlling, when the battery cluster is charged, each bypass circuit to bypass a battery pack whose first parameter value is greater than or equal to a first preset parameter value; or
controlling, when the battery cluster is discharged, each bypass circuit to bypass a battery pack whose first parameter value is less than or equal to a second preset parameter value.

In a possible implementation, the controlling, when the battery cluster is charged, each bypass circuit to bypass a battery pack whose first parameter value is greater than or equal to a first preset parameter value specifically includes:

when the battery cluster is charged, sequentially bypassing battery packs whose first parameter values are greater than or equal to the first preset parameter value, until only one remaining battery pack is not bypassed; or
the controlling, when the battery cluster is discharged, each bypass circuit to bypass a battery pack whose first parameter value is less than or equal to a second preset parameter value specifically includes:
when the battery cluster is discharged, sequentially bypassing battery packs whose first parameter values are less than or equal to the second preset parameter value, until only one remaining battery pack is not bypassed.

In a possible implementation, the method further includes:

controlling each bypass circuit when the battery cluster is charged and a first parameter value of the only one remaining battery pack is greater than or equal to the first preset parameter value, so that the bypassed battery pack reconnects to the battery cluster; or
controlling each bypass circuit when the battery cluster is discharged and a first parameter value of the only one remaining battery pack is less than or equal to the second preset parameter value, so that the bypassed battery pack reconnects to the battery cluster.

In a possible implementation, the method further includes:

before bypassing the battery pack or connecting to the battery pack, controlling a direct current/direct current conversion circuit connected to an output end of the battery cluster to stop working, where a first terminal of the direct current/direct current conversion circuit is connected to the output end of the battery cluster; and
after completing bypassing or connecting to the battery pack, controlling a voltage at the first terminal of the direct current/direct current conversion circuit to be equal to an output voltage of the battery cluster, and controlling the direct current/direct current conversion circuit to start working.

In a possible implementation, the method further includes:

obtaining second parameter values corresponding to all battery packs; and
determining the first parameter values of all the battery packs based on the second parameter values corresponding to all the battery packs.

In a possible implementation, the second parameter value includes a total capacity, a state of energy SOE value, and a state of health SOH value of the battery pack, and the first parameter value is a state of charge SOC value.

In a possible implementation, the first parameter value is a voltage value or a state of charge SOC value.

## BRIEF DESCRIPTION OF DRAWINGS

FIG. 1 is a schematic new energy power generation system according to an embodiment of this application;
FIG. 2 is a schematic diagram of an energy storage system according to an embodiment of this application;
FIG. 3 is a schematic diagram of a battery cluster according to an embodiment of this application;
FIG. 4 is a schematic diagram of another battery cluster according to an embodiment of this application;
FIG. 5 is a schematic diagram of another energy storage system according to an embodiment of this application;
FIG. 6 is a schematic diagram of still another energy storage system according to an embodiment of this application;
FIG. 7 is a flowchart of a method for determining a charging/discharging state of a battery pack according to an embodiment of this application;
FIG. 8A and FIG. 8B are schematic diagrams of a method for controlling an energy storage system according to an embodiment of this application;
FIG. 9 is a schematic diagram of another method for controlling an energy storage system according to an embodiment of this application;
FIG. 10 is a schematic diagram of still another method for controlling an energy storage system according to an embodiment of this application;
FIG. 11 is a schematic diagram of a photovoltaic power generation system according to an embodiment of this application; and
FIG. 12 is a schematic diagram of another photovoltaic power generation system according to an embodiment of this application.

## DESCRIPTION OF EMBODIMENTS

To enable a person skilled in the art to better understand technical solutions provided in embodiments of this application, an application scenario of the technical solutions of this application is first described below.

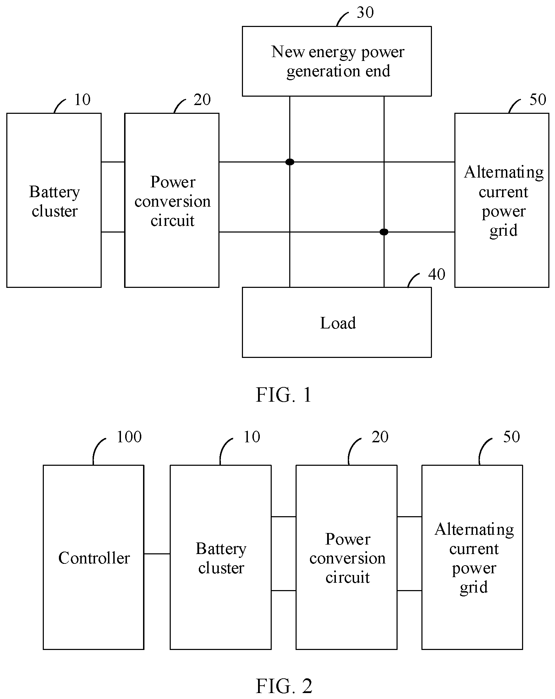

FIG. 1 is a schematic new energy power generation system according to an embodiment of this application.

The new energy power generation system includes a battery cluster 10, a power conversion circuit 20, a new energy power generation end 30, and a load 40.
The new energy power generation end 30 is configured to output an alternating current. Because the new energy power generation end 30 has characteristics of fluctuation and an uncertainty, an energy yield of the new energy power generation end 30 fluctuates. When the alternating current that is output by the new energy power generation end 30 is higher than a power consumption demand of an alternating current power grid 50, the power conversion circuit 20 converts surplus electricity into a direct current to charge the battery cluster 10. When the alternating current that is output by the new energy power generation end 30 is lower than a power consumption demand of the alternating current power grid 50, the power conversion circuit 20 converts, into an alternating current, a direct current that is output by the battery cluster 10, and then outputs the alternating current to the alternating current power grid 50, so that the alternating current power grid 50 tends to be stable.
For example, the new energy power generation end 30 is a photovoltaic power generation end. The new energy power generation end 30 includes a photovoltaic module and a direct current (Direct Current, DC)/alternating current (Alternating Current, AC) conversion circuit (which may also be referred to as an inverter circuit or an inverter). The photovoltaic module generates a direct current by using optical energy. The DC/AC conversion circuit converts the direct current into an alternating current, and then outputs the alternating current to the alternating current power grid 50 and/or charges the battery cluster 10.
The load 40 is an electric device of the new energy power generation system. This is not specifically limited in this application.
The battery cluster 10 includes a plurality of battery packs, and each battery pack includes a plurality of battery cells connected in series or in a serial and parallel connection manner. Because SOHs or original SOCs of batteries are different, electricity quantities of the battery packs are unbalanced. Consequently, duration for fully charging or discharging the battery packs is different. Specifically, when a plurality of battery packs are connected in series to form a battery cluster, because currents of all the battery packs are the same, a total current of the battery cluster needs to be limited based on a minimum current of the battery pack. Consequently, a battery pack with a higher remaining electricity quantity cannot be fully discharged, and a battery pack with a lower remaining electricity quantity cannot be fully charged. Therefore, the electricity quantity of the battery pack cannot be fully used, thereby limiting the current of the battery cluster, and wasting the electricity quantity. During next charging or discharging, the battery cluster cannot achieve maximum backup duration because the electricity quantities of the battery packs are unbalanced.
To resolve the foregoing technical problem, this application provides an energy storage system, a method for controlling an energy storage system, and a photovoltaic power generation system. Each battery pack in a battery cluster of the energy storage system is correspondingly connected to one bypass circuit. A controller controls each bypass circuit based on a first parameter value of each battery pack, so that the battery pack can be bypassed from the battery cluster, thereby balancing electricity quantities of battery packs. After the battery pack is bypassed, a remaining battery pack can still be charged or discharged with a maximum current. Therefore, a current of the battery cluster can remain unchanged. Based on the energy storage system, the electricity quantities of the battery packs can be balanced, thereby reducing impact on a current of the battery cluster, reducing a waste of the electricity quantity, and further implementing maximum backup duration.

To make a person skilled in the art understand the technical solutions in this application more clearly, the following describes the technical solutions in embodiments of this application with reference to the accompanying drawings in embodiments of this application.

Terms such as "first" and "second" in the descriptions of this application are used only for the purpose of description and cannot be understood as indicating or implying relative importance or implicitly indicating a quantity of technical features indicated.

In this application, unless otherwise expressly specified and limited, a term "connection" should be understood in a broad sense. For example, the connection may be a fastened connection, a detachable connection, or an integral connection, or may be a direct connection or an indirect connection based on an intermediate medium.

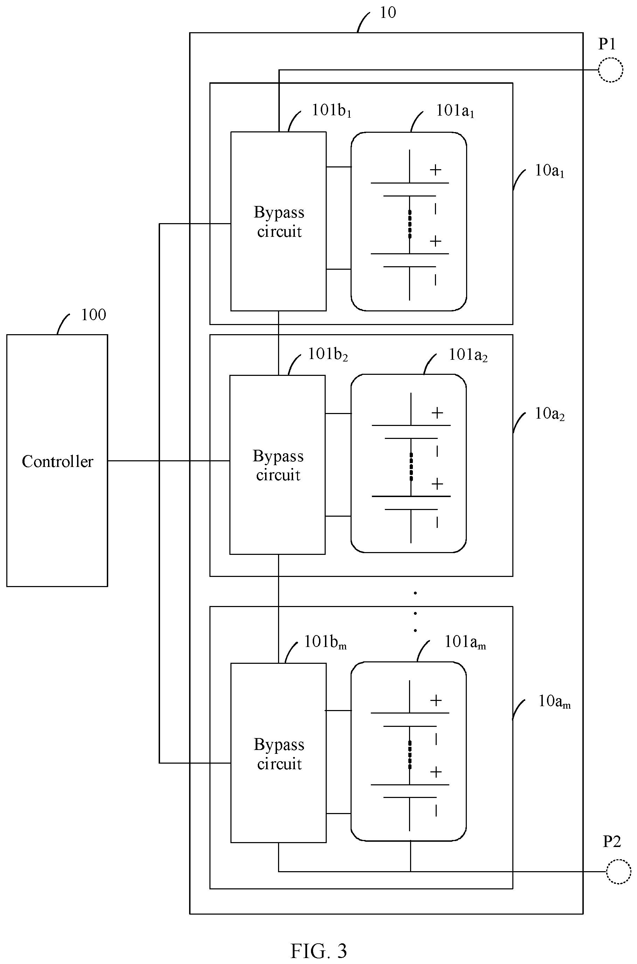

Refer to both FIG. 2 and FIG. 3. FIG. 2 is a schematic diagram of an energy storage system according to an embodiment of this application. FIG. 3 is a schematic diagram of a battery cluster according to an embodiment of this application.

The energy storage system includes a battery cluster 10, a power conversion circuit 20, and a controller 100.

An output end of the battery cluster 10 is connected to a first terminal of the power conversion circuit 20. A second terminal of the power conversion circuit 20 is connected to an output end of the energy storage system and is configured to output electric energy for an alternating current power grid.

The power conversion circuit 20 is configured to: convert a direct current provided by the battery cluster 10 into an alternating current and then transmit the alternating current to the alternating current power grid 50, or convert an alternating current obtained from the second terminal of the power conversion circuit 20 into a direct current for charging the battery cluster. That is, the power conversion circuit 20 can implement bidirectional power conversion, and may charge the battery cluster 10 by using an alternating current provided by the alternating current power grid or a new energy power generation end, or may supply power to the alternating current power grid 50 by using the direct current that is output by the battery cluster 10.

As shown in FIG. 3, each battery 10 includes at least two energy storage modules connected in series. In the figure, the energy storage modules are represented by $10a_1$ to $10a_m$.

Each energy storage module includes one bypass circuit and one battery pack, and each battery pack includes a plurality of batteries.

For example, the energy storage module $10a_1$ includes a bypass circuit $101b_1$ and a battery pack $101a_1$.

The batteries in each battery pack may be connected in series or in a serial and parallel connection manner. This is not specifically limited in this embodiment of this application. In FIG. 3 and the following descriptions, that the batteries in the battery pack are connected in series is used as an example.

The bypass circuit in this embodiment of this application includes two working states. In a first working state, the corresponding battery pack is not bypassed, so that the corresponding battery pack can be connected to the battery cluster in series. In a second working state, the corresponding battery pack is bypassed, that is, the battery pack is equivalently cut off from the battery cluster. Specifically, when the battery cluster is in a charging state, the battery pack stops being charged after being bypassed; or when the battery cluster is in a discharging state, the battery pack stops being discharged after being bypassed.

A first parameter value can represent an electricity quantity of a battery pack. The controller 100 may determine the electricity quantity of the corresponding battery pack based on the first parameter value, and control the bypass circuit to switch between the foregoing two working states, so that the electricity quantities of the battery packs are balanced.

The foregoing controller may be an ASIC, a PLD, a DSP, or a combination thereof. The PLD may be a CPLD, an FPGA, a GAL, or any combination thereof. This is not specifically limited in this embodiment of this application.

The controller in the foregoing descriptions of this embodiment of this application may be a one-level controller or a multi-level controller. When the controller is the multi-level controller, an upper-level controller may receive information sent by a lower-level controller, there may be a plurality of lower-level controllers, and the upper-level controller may control the lower-level controller. The multi-level controller may be independently integrated on a printed circuit board (Printed circuit board, PCB), or may be physically divided into a plurality of parts and separately disposed on PCBs at different positions of the energy storage system. The parts cooperate to implement a control function. This is not specifically limited in this embodiment of this application.

A battery cell in the battery pack may be a type such as a lithium-ion battery, a lead-acid battery, a supercapacitor, or a combination of the foregoing types. This is not specifically limited in this embodiment of this application.

Based on the energy storage system provided in this embodiment of this application, when the battery cluster is charged, the bypassed battery pack first stops being charged. As the battery packs are gradually bypassed, the electricity quantities of the battery packs in the battery cluster are synchronized. When the battery cluster is discharged, the bypassed battery pack first stops being discharged. As the battery packs are gradually bypassed, the electricity quantities of the battery packs in the battery cluster are also synchronized. After the battery pack is bypassed, a remaining battery pack can still be charged or discharged with a maximum current. Therefore, a current of the battery cluster can remain unchanged. To sum up, the energy storage system can balance the electricity quantities of the battery packs, thereby reducing impact on the current of the battery cluster, and reducing a waste of the electricity quantity. In addition, because the electricity quantities of the battery packs are balanced, maximum backup duration is further implemented.

Descriptions are provided below with reference to a specific implementation of the energy storage system.

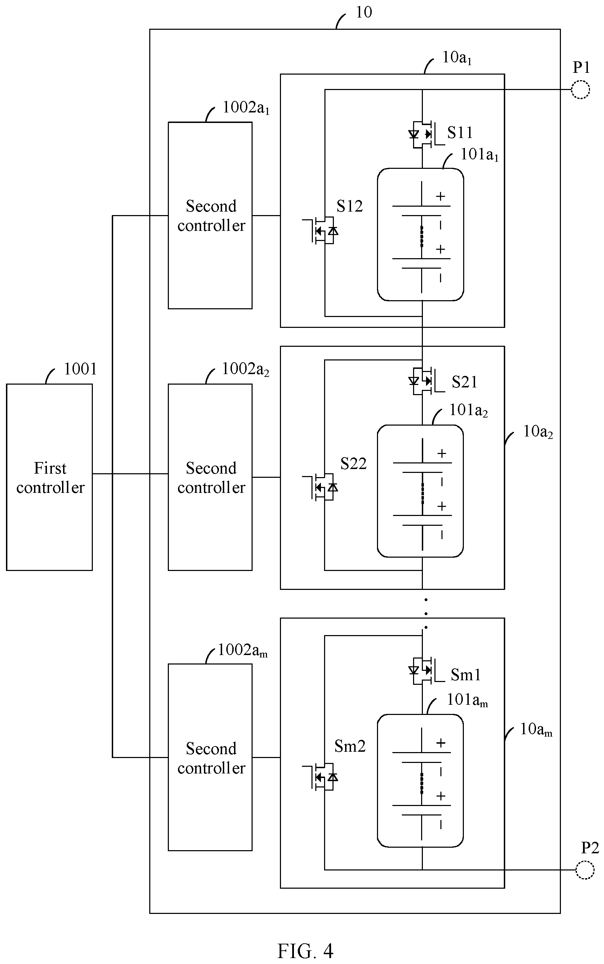

FIG. 4 is a schematic diagram of another battery cluster according to an embodiment of this application.

A controller in the figure includes two levels of controllers: a first-level controller 1001 and second-level controllers 1002a1 to 1002am.

A quantity of second-level controllers is the same as a quantity of battery packs. The second-level controllers are connected to the battery packs in a one-to-one correspondence. Each second controller is connected to the first controller 1001, and each second controller may communicate with the first controller 1001.

Each bypass circuit in the figure includes a first controllable switch and a second controllable switch. If the battery cluster includes m battery packs, first controllable switches in the battery cluster are S11 to Sm1, and second controllable switches in the battery cluster are S12 to Sm2.

An energy storage module 10a1 is used as an example. The first controllable switch is S11, and the second controllable switch is S12. A positive output end of a battery pack 101a1 is connected to a first end of the first controllable switch S11, a second end of the first controllable switch S11 is connected to a first end of the second controllable switch S12 and a positive output end of the energy storage module 10a1, a second end of the second controllable switch S12 is connected to a negative output end of the battery pack 101a1, and a negative output end of the battery pack 101a1 is connected to a negative output end of the energy storage module 10a1.

Similarly, S21 and S22 correspond to the battery pack 101a$_2$, and by analogy, Sm1 and Sm2 correspond to the battery module 101a$_m$.

The first controllable switch and the second controllable switch in each energy storage module may be an insulated gate bipolar transistor (Insulated Gate Bipolar Transistor, IGBT), a metal-oxide semiconductor field-effect transistor (Metal Oxide Semiconductor Filed Effect Transistor, MOSFET), a silicon carbide metal-oxide semiconductor field-effect transistor (Silicon Carbide Metal Oxide Semiconductor, SiC MOSFET), a mechanical switch, a combination thereof, or the like. The second controller controls a working state of the second controller by sending a control signal to the first controllable switch and the second controllable switch. In a possible implementation, the control signal is a pulse width modulation (Pulse width modulation, PWM) signal.

For example, both the first controllable switch and the second controllable switch are N-type MOSFETs. In this case, a first end of each of the first controllable switch and the second controllable switch is a drain, and a second end is a gate. A direction of a body diode of S11 is opposite to a direction of a battery voltage, and a direction of a body diode of S12 is opposite to a direction of the body diode of S11, to prevent the battery pack from being directly shortcircuited by using the body diode.

In some other embodiments, an additional diode connected in parallel may also be used to replace a body diode of a switch device.

The foregoing switch device may be integrated together with the second controller, or may be independently designed on a PCB and then integrated inside or outside the battery pack. This is not specifically limited in this embodiment of this application.

In some embodiments, the second controller is a battery monitoring unit, and the first controller is a battery control unit.

The controller is specifically configured to: control, when the battery cluster is charged, each bypass circuit to bypass a battery pack whose first parameter value is greater than or equal to a first preset parameter value; or control, when the battery cluster is discharged, each bypass circuit to bypass a battery pack whose first parameter value is less than or equal to a second preset parameter value. An operating principle of the controller is described below in detail.

The following first describes a first implementation of controlling a bypass circuit.

Each second controller obtains a second parameter value of the corresponding battery pack and sends the second parameter value to the first controller. The second parameter value includes a total capacity Q, a state of energy (State of Energy, SOE) value, and a state of health (State of Health, SOH) value of the battery pack.

The SOE value represents a current controllable electricity quantity of the battery pack. The SOH represents a capability of a current battery pack to store electric energy relative to a new battery pack, is represented in a form of a percentage, and may be understood as a ratio of a current available capacity to the total capacity Q.

The first controller determines first parameter values of all the batteries based on obtained second parameter values of all the battery packs; and when the battery cluster is charged, determines the battery pack whose first parameter value is greater than or equal to the first preset parameter value as a to-be-bypassed battery pack; or when the battery cluster is discharged, determines the battery pack whose first parameter value is less than or equal to the second preset parameter value as a to-be-bypassed battery pack.

The first parameter value is a state of charge (State of Charge, SOC) value. The first preset parameter value and the second preset parameter value are preset and stored in the first controller based on an actual situation, and are invoked when the first preset parameter value and the second preset parameter value are to be used. The first preset parameter value and the second preset parameter value are not specifically limited in this embodiment of this application.

Specifically, the first controller may determine the SOC value according to the following formula:

$$SOC = \frac{SOE}{Q \cdot SOH} \qquad (1)$$

The SOC obtained in the formula (1) is a current actual SOC of the battery pack, that is, a ratio of a current electricity quantity to a current capacity.

The first controller then sends a control instruction to the second controller. The control instruction is used to instruct a corresponding second controller to control a bypass circuit to bypass a to-be-bypassed battery pack.

For example, when the battery pack 101a1 is determined as a to-be-bypassed battery pack, the control instruction sent by the first controller is used to instruct the second controller 1002a1 to control S11 and S12 to bypass the battery pack 101a1.

When the battery pack 101a1 is normally connected to the battery cluster in series, the first controllable switch S11 is closed, and the second controllable switch S12 is open. When bypassing the battery pack 101a1, the second controller 1002a1 first controls both the first controllable switch S11 and the second controllable switch S12 to be open; and after a first preset time, controls the second controllable switch S12 to be closed.

The first preset time is greater than or equal to a dead time (dead time) of the first controllable switch S11, to avoid a short circuit between the positive output end and the negative output end of the battery pack 101a1 caused by simultaneous closure of the first controllable switch S11 and the second controllable switch S12. The first preset time is not specifically limited in this embodiment of this application.

A principle of bypassing another battery pack is similar. Details are not described herein in this embodiment of this application again.

When the battery cluster is charged, electricity quantities of battery packs may be unbalanced, so that duration for fully charging the battery packs may be different. The first controller sequentially determines battery packs whose first parameter values are greater than or equal to the first preset parameter value as to-be-bypassed battery packs, and sends a control instruction to the second controller, so that the second controller controls the bypass circuits to sequentially bypass the to-be-bypassed battery packs, until only one remaining battery pack is not bypassed. In this case, electricity quantities of the other bypassed battery packs are balanced.

In this case, the only one remaining battery pack continues being charged. When the first controller determines that a first parameter value of the only remaining battery pack is greater than or equal to the first preset parameter value, it indicates that charging of the battery cluster is completed in this case. The only remaining battery pack is no longer bypassed. However, the second controller controls all the bypassed battery packs to reconnect to the battery cluster.

When the battery cluster is discharged, electricity quantities of battery packs may be unbalanced, so that duration for fully discharging the battery packs may be different. The first controller sequentially determines battery packs whose first parameter values are less than or equal to the second preset parameter value as to-be-bypassed battery packs, and sends a control instruction to the second controller, so that the second controller controls the bypass circuits to sequentially bypass the to-be-bypassed battery packs, until only one remaining battery pack is not bypassed. In this case, electricity quantities of the other bypassed battery packs are balanced.

The only one remaining battery pack continues being discharged. When the first controller determines that a first parameter value of the only remaining battery pack is less than or equal to the second preset parameter value, it indicates that discharging of the battery cluster is completed in this case. The only remaining battery pack is no longer bypassed. However, the second controller controls all the bypassed battery packs to reconnect to the battery cluster.

For example, the battery pack 101a1 reconnects to a circuit. When the battery pack 101a1 is in a bypassed state, the first controllable switch S11 is open, and the second controllable switch S12 is closed. When controlling the battery pack 101a1 to reconnect to the circuit, the controller first controls both the first controllable switch S11 and the second controllable switch S12 to be open; and after a second preset time, controls the first controllable switch S11 to be closed.

The second preset time is greater than or equal to a dead time (dead time) of the second controllable switch S12, to avoid a short circuit between the positive output end and the negative output end of the battery pack 101a1 caused by simultaneous closure of the first controllable switch S11 and the second controllable switch S12. The second preset time is not specifically limited in this embodiment of this application.

A principle of bypassing another battery pack is similar. Details are not described herein in this embodiment of this application again.

During actual application, when the first controllable switch S11 and the second controllable switch S12 use components of a same specification, the first preset time and the second preset time may be the same.

The following describes a second implementation of controlling a bypass circuit.

Each second controller is configured to: obtain a first parameter value of the corresponding battery pack and send the first parameter value to the first controller 1001. The first parameter value is a voltage value or an SOC value.

When the battery cluster is charged, the first controller determines the battery pack whose first parameter value is greater than or equal to the first preset parameter value as a to-be-bypassed battery pack; or when the battery cluster is discharged, determines the battery pack whose first parameter value is less than or equal to the second preset parameter value as a to-be-bypassed battery pack. Then the first controller 1001 sends a control instruction to each second controller. The control instruction is used to instruct a corresponding second controller to control a bypass circuit to bypass a to-be-bypassed battery pack. Detailed descriptions are provided below.

When the first parameter value is a voltage value, the first preset parameter value is a first preset voltage value, and the second preset parameter value is a second preset voltage value. When the battery cluster is charged, electricity quantities of battery packs may be unbalanced, so that duration for fully charging the battery packs may be different, which is manifested by different voltage values of the battery packs. The first controller sequentially determines battery packs whose voltage values are greater than or equal to the first preset voltage value as to-be-bypassed battery packs, and sends a control instruction to the second controller, so that the second controller controls the bypass circuits to sequentially bypass the to-be-bypassed battery packs, until only one remaining battery pack is not bypassed. In this case, electricity quantities of the other bypassed battery packs are balanced, and charging is completed.

In this case, the only one remaining battery pack continues being charged. When the first controller determines that a voltage value of the only remaining battery pack is greater than or equal to the first preset voltage value, it indicates that charging of the battery cluster is completed in this case. The only remaining battery pack is no longer bypassed. However, the second controller controls all the bypassed battery packs to reconnect to the battery cluster.

When the battery cluster is discharged, electricity quantities of battery packs may be unbalanced, so that duration for fully discharging the battery packs may be different. Therefore, voltages of the battery packs are different. The first controller sequentially determines battery packs whose voltage values are less than or equal to the second preset voltage value as to-be-bypassed battery packs, and sends a control instruction to the second controller, so that the second controller controls the bypass circuits to sequentially bypass the to-be-bypassed battery packs, until only one remaining battery pack is not bypassed. In this case, electricity quantities of the other bypassed battery packs are balanced, and discharging is completed.

The only one remaining battery pack continues being discharged. When the first controller determines that a voltage value of the only remaining battery pack is less than or equal to the second preset voltage value, it indicates that discharging of the battery cluster is completed in this case. The only remaining battery pack is no longer bypassed. However, the second controller controls all the bypassed battery packs to reconnect to the battery cluster.

An implementation in which the controller controls the bypass circuit, so that the battery pack is bypassed or re-connected to the battery cluster in series is the same as that described above, and details are not described herein again.

In the foregoing descriptions, that the first parameter value is a voltage value is used as an example. When the first parameter value is an SOC value, the first preset parameter value is a first preset SOC value, and the second preset parameter value is a second preset SOC value. A specific working process of the controller is similar to that described above, and details are not described herein in this embodiment again.

To sum up, the energy storage system can balance the electricity quantities of the battery packs. After a fully charged or discharged battery pack is cut off, another battery pack can still be charged or discharged with a maximum current, thereby reducing impact on a current of the battery cluster. In addition, because the electricity quantities of the battery packs are balanced, maximum backup duration is further implemented. In addition, when it is determined that a battery is abnormal, a bypass circuit may be controlled to bypass a battery pack in which the abnormal battery is located, to rectify a fault, and ensure that a remaining battery pack can continue to normally run.

The controller in this embodiment of this application may further control a working state of the power conversion circuit. The following provides specific descriptions with reference to the accompanying drawings.

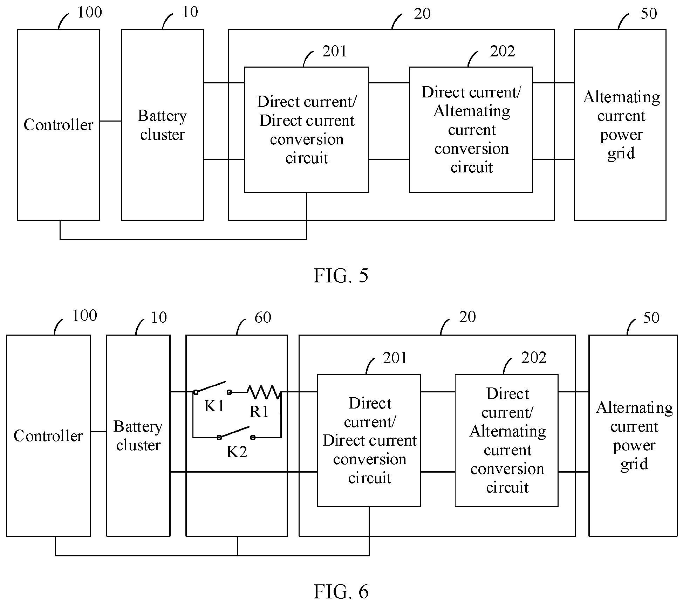

FIG. 5 is a schematic diagram of another energy storage system according to an embodiment of this application.

A power conversion circuit 20 of the energy storage system includes a direct current/direct current conversion circuit 201 and a direct current/alternating current conversion circuit 202.

A first terminal of the direct current/direct current conversion circuit 201 is a first terminal of the power conversion circuit 20, a second terminal of the direct current/direct current conversion circuit 201 is connected to a first terminal of the direct current/alternating current conversion circuit 202, and a second terminal of the direct current/alternating current conversion circuit 202 is a second terminal of the power conversion circuit 201.

The direct current/direct current conversion circuit 201 is configured to: perform direct current conversion on a direct current provided by a battery cluster 10 and then transmit a direct current obtained through direct current conversion to the direct current/alternating current conversion circuit 202, or perform direct current conversion on a direct current provided by the direct current/alternating current conversion circuit 202 and then transmit a direct current obtained through direct current conversion to the battery cluster 10, to charge the battery cluster 10.

The direct current/alternating current conversion circuit 202 is configured to: convert a direct current provided by the direct current/direct current conversion circuit 201 into an alternating current, or convert an obtained alternating current into a direct current and then transmit the direct current to the direct current/direct current conversion circuit 201. The second terminal of the direct current/alternating current conversion circuit 202 may obtain an alternating current from an alternating current power grid or a new energy power generation end.

In some embodiments, the direct current/alternating current conversion circuit 202 is a bidirectional direct current/alternating current converter, and may selectively be a neutral point clamped T-type three-level circuit, a neutral point clamped (Neutral Point Clamped, NPC) circuit, an active neutral point clamped (Active Neutral Point Clamped, ANPC) circuit, a flying capacitor multi-level circuit, or the like. Because a port voltage of a battery cell changes with an energy storage capacity, a port output voltage of the battery cluster is an output voltage in a wide range. Therefore, to match the change range of the port voltage of the battery cluster, the direct current/direct current conversion circuit 201 and the direct current/alternating current conversion circuit 202 generally support input and output capabilities in a wide range.

According to the invention, the controller 100 is further configured to: before bypassing or connecting to the battery pack, control the direct current/direct current conversion circuit 201 to stop working; and after the battery pack is bypassed or connected, control the direct current/direct current conversion circuit 201 to resume working. The direct current/direct current conversion circuit 201 stops working, that is, the direct current/direct current conversion circuit 201 is controlled to be powered off, or the control signal is stopped from being sent to the direct current/direct current conversion circuit 201.

The following specifically describes a manner of controlling the direct current/direct current conversion circuit.

FIG. 6 is a schematic diagram of still another energy storage system according to an embodiment of this application.

The energy storage system shown in the figure further includes a soft-start circuit 60. A positive port of an output end of a battery cluster 10 is connected to a positive port of a first terminal of a direct current/direct current conversion circuit 201 through the soft-start circuit 60, or a negative port of an output end of a battery cluster 10 is connected to a negative port of a first terminal of a direct current/direct current conversion circuit 201 through the soft-start circuit 60. FIG. 6 shows an implementation in which the soft-start circuit 60 is connected to the positive port of the first terminal of the direct current/direct current conversion circuit 201.

The soft-start circuit 60 specifically includes a first relay K1, a second relay K2, and a first resistor R1.

The first relay K1 is connected to the first resistor R1 in series and then connected to the second relay K2 in parallel.

The controller 100 is further configured to: before bypassing the battery pack or connecting to the battery pack, control the first relay and the second relay to be open, so that the direct current/direct current conversion circuit 201 stops working.

Further, to protect the battery cluster, in some embodiments, the controller 100 is further configured to: after completing bypassing or connecting to the battery pack, control a voltage at the first terminal of the direct current/direct current conversion circuit 201 to be equal to an output voltage of the battery cluster 10, and control the second relay K2 to be closed.

A bus capacitor (not shown in the figure) is usually disposed at the first terminal of the direct current/direct current conversion circuit 201. The controller 100 controls the voltage at the first terminal of the direct current/direct current conversion circuit 201 to be equal to the output voltage of the battery cluster 10, so that the voltage of the bus capacitor is equal to the output voltage of the battery cluster 10; and controls the second relay K2 to be closed. In this case, the voltage of the bus capacitor causes no shock on the battery cluster 10, thereby protecting the battery cluster 10.

In some other embodiments, the controller 100 is further configured to: after completing bypassing or connecting to the battery pack, first control the first relay K1 to be closed and the second relay K2 to be open; and after a third preset time, control the first relay K1 to be open and the second relay K2 to be closed.

A role of setting the third preset time is as follows: Charging and discharging are performed between the first terminal of the direct current/direct current conversion circuit 201 and the output end of the battery cluster 10 after current limiting is performed by using the first relay K1 and the first resistor R1, to achieve potential equalization, thereby reducing a shock on the battery cluster 10. The third preset time may be set based on an actual situation. This is not specifically limited in this embodiment of this application.

The foregoing soft-start circuit 60 may be integrated together with the direct current/direct current conversion circuit 201, or the soft-start circuit 60 is independently disposed. This is not specifically limited in this embodiment of this application.

To sum up, based on the energy storage system provided in this embodiment of this application, electricity quantities of battery packs can be balanced. The direct current/direct current conversion circuit and the soft-start circuit may further be controlled, so that impact on the battery cluster caused by a relatively large current shock when the battery pack is bypassed or reconnected is avoided, thereby protecting the battery cluster.

Based on the energy storage system provided in the foregoing embodiment, an embodiment of this application further provides a method for controlling an energy storage system, applied to the energy storage system provided in the foregoing embodiment. The method includes: controlling, based on a first parameter value of each battery pack, a bypass circuit corresponding to each battery pack, to balance electricity quantities of battery packs. The following provides specific descriptions with reference to the accompanying drawings.

A charging/discharging state of the battery pack is first determined.

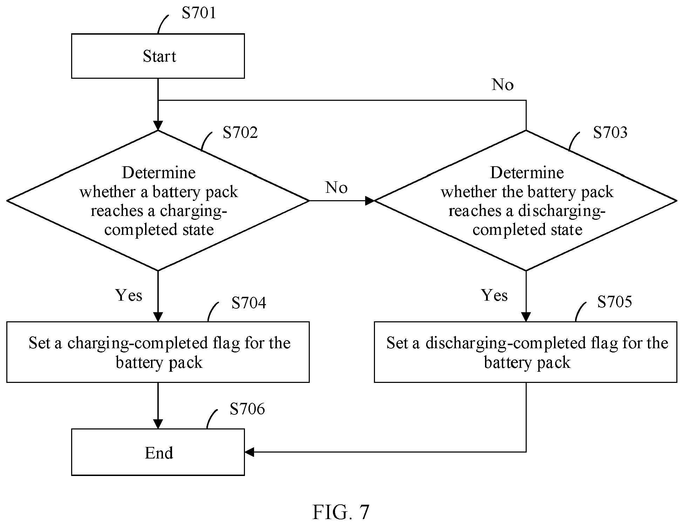

FIG. 7 is a flowchart of a method for determining a charging/discharging state of a battery pack according to an embodiment of this application.

The method includes the following steps.

S701: Start.

S702: Determine whether the battery pack reaches a charging-completed state.

If yes, perform S704; or if no, perform S703.

S703: Determine whether the battery pack reaches a discharging-completed state.

If no, continue performing determining again, and perform S702 again after a delay of a time period; or if yes, perform S705.

S704: Set a charging-completed flag for the battery pack.

It indicates that the battery pack is in the charging-completed state and may be bypassed.

S705: Set a discharging-completed flag for the battery pack.

It indicates that the battery pack is in the discharging-completed state and may be bypassed.

S706: End.

The following describes a method for controlling each battery pack to balance an electricity quantity.

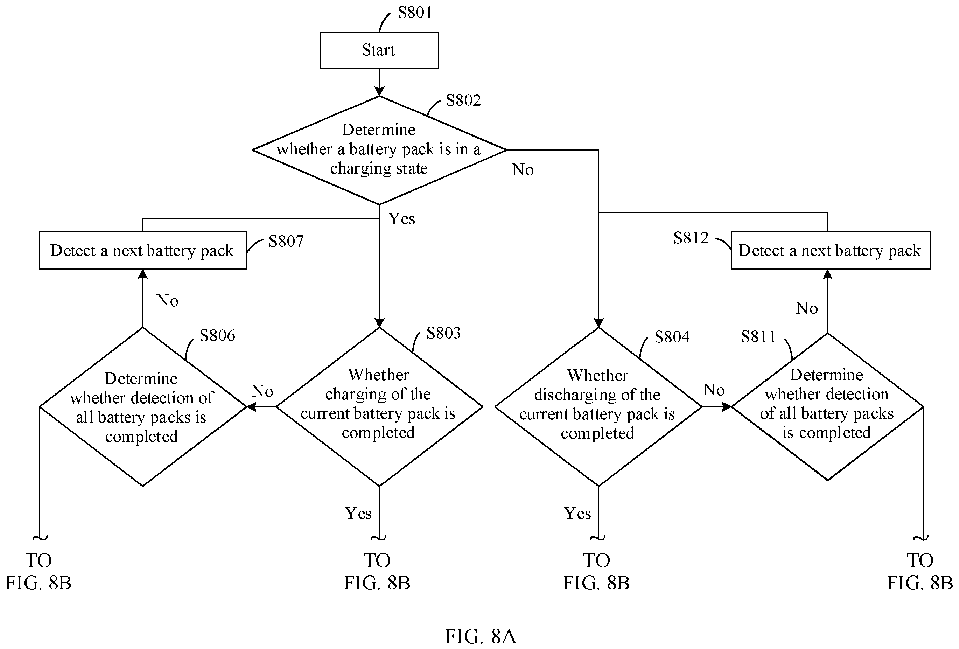

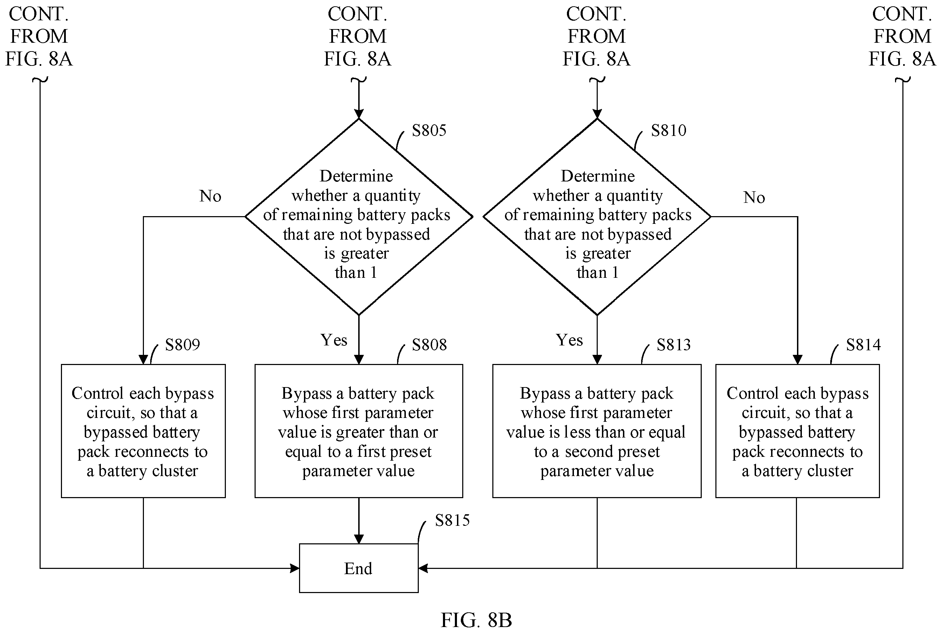

FIG. 8A and FIG. 8B are schematic diagrams of a method for controlling an energy storage system according to an embodiment of this application.

S801: Start.

S802: Determine whether a battery pack is in a charging state.

If yes, perform S803; otherwise, perform S804.

S803: Whether charging of the current battery pack is completed.

If yes, perform S805; otherwise, perform S806.

In some embodiments, it may be determined, based on the charging-completed flag for the battery pack in S704, whether charging of the current battery pack is completed.

S804: Whether discharging of the current battery pack is completed.

If yes, perform S810; otherwise, perform S811.

In some embodiments, it may be determined, based on the discharging-completed flag for the battery pack in S705, whether discharging of the current battery pack is completed.

S805: Determine whether a quantity of remaining battery packs that are not bypassed is greater than 1.

If yes, perform S808; otherwise, perform S809.

S806: Determine whether detection of all battery packs is completed.

If yes, perform S815; otherwise, perform S807.

S807: Detect a next battery pack.

S808: Bypass a battery pack whose first parameter value is greater than or equal to a first preset parameter value.

That is, when a battery cluster is charged, battery packs whose first parameter values are greater than or equal to the first preset parameter value are sequentially bypassed, until only one remaining battery pack is not bypassed.

In some embodiments, a second parameter value corresponding to the battery pack is first obtained, and then a first parameter value corresponding to the battery pack is determined based on the second parameter value corresponding to the battery pack. The second parameter value includes a total capacity, a state of energy SOE value, and a state of health SOH value of the battery pack, and the first parameter value is a state of charge SOC value.

In some other embodiments, a first parameter value corresponding to the battery pack is directly obtained, and the first parameter value is a voltage value or a state of charge SOC value.

When the battery pack is bypassed, both a first controllable switch and a second controllable switch of a bypass circuit corresponding to the battery pack are first controlled to be open; and after a first preset time, the second controllable switch is controlled to be closed. The first preset time is greater than or equal to a dead time of the first controllable switch, to avoid a short circuit between a positive output end and a negative output end of the battery pack caused by simultaneous closure of the first controllable switch and the second controllable switch. The first preset time is not specifically limited in this embodiment of this application.

S809: Control each bypass circuit, so that the bypassed battery pack reconnects to the battery cluster.

In this case, electricity quantities of other bypassed battery packs are balanced. When a first parameter value of only one remaining battery pack is greater than or equal to the first preset parameter value, it indicates that charging of the battery cluster is completed in this case. The only remaining battery pack is no longer bypassed. However, each bypass circuit is controlled, so that the bypassed battery pack reconnects to the battery cluster.

When the battery pack is controlled to reconnect to the battery cluster, both the first controllable switch and the second controllable switch of the bypass circuit corresponding to the battery pack are first controlled to be open; and after a second preset time, the first controllable switch is controlled to be closed.

The second preset time is greater than or equal to a dead time of the second controllable switch, to avoid a short circuit between the positive output end and the negative output end of the battery pack caused by simultaneous closure of the first controllable switch and the second controllable switch. The second preset time is not specifically limited in this embodiment of this application.

S810: Determine whether a quantity of remaining battery packs that are not bypassed is greater than 1.

S811: Determine whether detection of all battery packs is completed.

If yes, perform S815; otherwise, perform S812.

S812: Detect a next battery pack.

S813: Bypass a battery pack whose first parameter value is less than or equal to a second preset parameter value.

That is, when the battery cluster is discharged, battery packs whose first parameter values are less than or equal to the second preset parameter value are sequentially bypassed, until only one remaining battery pack is not bypassed.

S814: Control each bypass circuit, so that the bypassed battery pack reconnects to the battery cluster.

In this case, electricity quantities of other bypassed battery packs are balanced. When a first parameter value of only one remaining battery pack is less than or equal to the second preset parameter value, it indicates that discharging of the battery cluster is completed in this case. The only remaining battery pack is no longer bypassed. However, each bypass circuit is controlled, so that the bypassed battery pack reconnects to the battery cluster.

S815: End.

The division and sequence of the foregoing steps are merely for ease of description, and do not constitute a limitation on the technical solutions of this application. A person skilled in the art may make proper adjustments based on an actual situation.

To sum up, based on the foregoing control method provided in this embodiment of this application, electricity quantities of the battery packs can be balanced. After a fully charged or discharged battery pack is cut off, another battery pack can still be charged or discharged with a maximum current, thereby reducing impact on a current of the battery cluster. In addition, because the electricity quantities of the battery packs are balanced, maximum backup duration is further implemented. In addition, when it is determined that a battery is abnormal, a bypass circuit may be controlled to bypass a battery pack in which the abnormal battery is located, to rectify a fault, and ensure that a remaining battery pack can continue to normally run.

The following describes a method for controlling a soft-start circuit and a direct current/direct current conversion circuit in a power conversion circuit.

A positive port of an output end of a battery cluster is connected to a positive port of a first terminal of the direct current/direct current conversion circuit through the soft-start circuit, or a negative port of an output end of a battery cluster is connected to a negative port of a first terminal of the direct current/direct current conversion circuit through the soft-start circuit.

The soft-start circuit specifically includes a first relay K1, a second relay K2, and a first resistor R1. The first relay K1 is connected to the first resistor R1 in series and then connected to the second relay K2 in parallel.

For a specific implementation and a working principle of the direct current/direct current conversion circuit, refer to the descriptions in the foregoing embodiment. Details are not described in this embodiment of this application again.

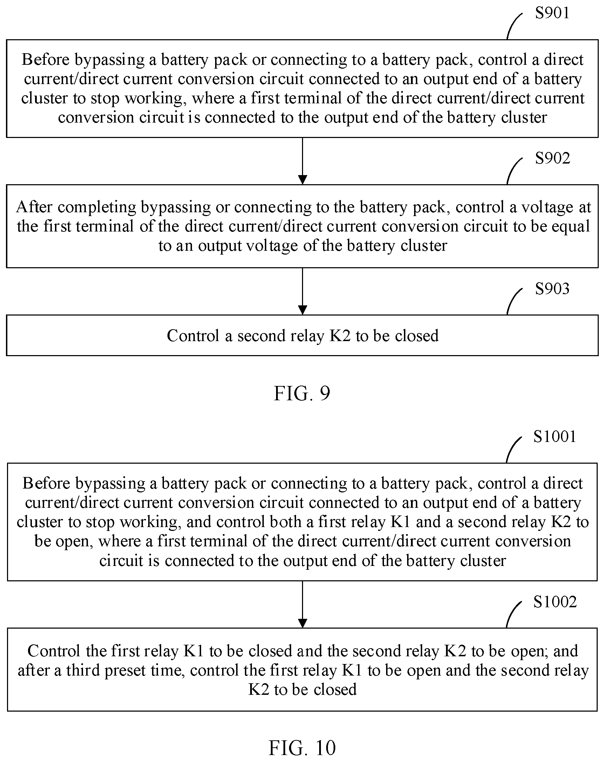

FIG. 9 is a schematic diagram of another method for controlling an energy storage system according to an embodiment of this application.

S901: Before bypassing the battery pack or connecting to the battery pack, control a direct current/direct current conversion circuit connected to an output end of a battery cluster to stop working, where a first terminal of the direct current/direct current conversion circuit is connected to the output end of the battery cluster.

S902: After completing bypassing or connecting to the battery pack, control a voltage at the first terminal of the direct current/direct current conversion circuit to be equal to an output voltage of the battery cluster.

A bus capacitor is usually disposed at the first terminal of the direct current/direct current conversion circuit. The voltage at the first terminal of the direct current/direct current conversion circuit is controlled to be equal to the output voltage of the battery cluster, so that a voltage of the bus capacitor is equal to the output voltage of the battery cluster; and then the second relay is controlled to be closed. In this case, the voltage of the bus capacitor causes no shock on the battery cluster, thereby protecting the battery cluster.

S903: Control the second relay K2 to be closed.

After the second relay K2 is closed, the direct current/direct current conversion circuit may be controlled to start to work.

FIG. 10 is a schematic diagram of still another method for controlling an energy storage system according to an embodiment of this application.

S1001: Before bypassing the battery pack or connecting to the battery pack, control a direct current/direct current conversion circuit connected to an output end of a battery cluster to stop working; and control both a first relay K1 and a second relay K2 to be open, where a first terminal of the direct current/direct current conversion circuit is connected to the output end of the battery cluster.

S1002: Control the first relay K1 to be closed and the second relay K2 to be open; and after a third preset time, control the first relay K1 to be open and the second relay K2 to be closed.

A role of setting the third preset time is as follows: Charging and discharging are performed between the first terminal of the direct current/direct current conversion circuit and the output end of the battery cluster after current limiting is performed by using the first relay and the first resistor, to achieve potential equalization, thereby reducing a shock on the battery cluster. The third preset time may be set based on an actual situation. This is not specifically limited in this embodiment of this application.

To sum up, based on the control method provided in this embodiment of this application, electricity quantities of battery packs can be balanced. The direct current/direct current conversion circuit and the soft-start circuit may further be controlled, so that impact on the battery cluster caused by a relatively large current shock when the battery pack is bypassed or reconnected is avoided, thereby protecting the battery cluster.

Based on the energy storage system provided in the foregoing embodiment, an embodiment of this application further provides a photovoltaic power generation system. The following provides specific descriptions with reference to the accompanying drawings.

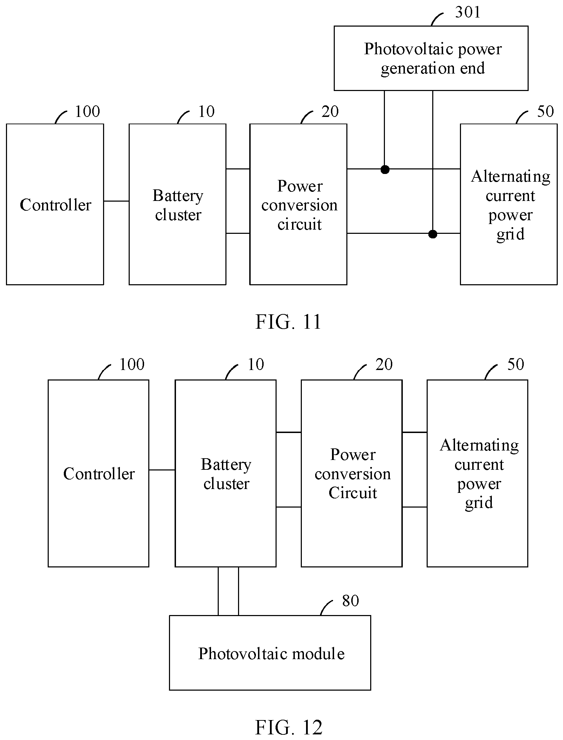

FIG. 11 is a schematic diagram of a photovoltaic power generation system according to an embodiment of this application.

The photovoltaic power generation system shown in the figure includes an energy storage system and a photovoltaic power generation end 301.

The energy storage system includes a battery cluster 10, a power conversion circuit 20, and a controller 100.

One battery cluster is connected to one power conversion circuit to form one energy storage branch, and the energy storage system includes at least one energy storage branch.

For a specific implementation and a working principle of the energy storage system, refer to the related descriptions in the foregoing embodiments. Details are not described in this embodiment of this application again.

The photovoltaic power generation end 301 specifically includes a photovoltaic module and a power conversion system. Detailed descriptions are provided below.

The photovoltaic module is configured to generate a direct current by using optical energy.

The power conversion system is configured to convert the direct current generated by a photovoltaic module into an alternating current.

In some embodiments, the power conversion system includes a direct current combiner box and a centralized inverter. The centralized inverter includes an inverter circuit, configured to invert a direct current that is input by at least one direct current combiner box into an alternating current. Each centralized inverter has a relatively high power.

In some other embodiments, the power conversion system includes a string inverter and an alternating current combiner box. The direct current side of the string inverter is connected to one or more photovoltaic modules. During actual application, the direct current side of the string inverter is generally connected to a plurality of photovoltaic modules.

A power of the string inverter is less than that of the centralized inverter. Therefore, the string inverter uses an outdoor modular design in most cases, and includes two levels of power conversion circuits. A first level is a direct current/direct current conversion circuit that is generally a boost circuit, and a second level is an inverter circuit.

In some other embodiments, the power conversion system includes an inverter and a maximum power point tracking (Maximum power point tracking, MPPT) boost combiner box. The MPPT boost combiner box is a boost converter. An input end of the MPPT boost combiner box is connected to the photovoltaic module, and an output end is connected to an input end of the inverter.

An output end of the photovoltaic power generation end is connected to an alternating current power grid, and is configured to transmit a generated alternating current to the alternating current power grid or charge the battery cluster 10 through the power conversion circuit 20.

FIG. 12 is a schematic diagram of another photovoltaic power generation system according to an embodiment of this application.

The photovoltaic power generation system shown in the figure includes an energy storage system and a photovoltaic module 80.

One battery cluster is connected to one power conversion circuit to form one energy storage branch, and the energy storage system includes at least one energy storage branch. Each battery cluster 10 is connected to at least one photovoltaic module 80. During actual application, each battery cluster 10 is generally correspondingly connected to a plurality of photovoltaic modules.

The photovoltaic module 80 is configured to generate a direct current by using optical energy, to charge the battery cluster 10.

Each battery pack in the battery cluster of the photovoltaic power generation system provided in this embodiment of this application is correspondingly connected to one bypass circuit, and a controller controls each bypass circuit based on a first parameter value of each battery pack, so that the battery pack can be bypassed from the battery cluster. When the battery cluster is charged, the bypassed battery pack first stops being charged. As battery packs are gradually bypassed, electricity quantities of the battery packs in the battery cluster are synchronized. When the battery cluster is discharged, the bypassed battery pack first stops being discharged. As the battery packs are gradually bypassed, the electricity quantities of battery packs in the battery cluster are similarly synchronized. However, after the battery pack is bypassed, a remaining battery pack can still be charged or discharged with a maximum current. Therefore, a current of the battery cluster can remain unchanged. To sum up, the energy storage system can balance the electricity quantities of the battery packs, thereby reducing impact on the current of the battery cluster, and reducing a waste of the electricity quantity. In addition, because the electricity quantities of the battery packs are balanced, maximum backup duration is further implemented.

The foregoing embodiments are merely intended for describing the technical solutions of this application other than limiting this application. Although this application is described in detail with reference to the foregoing embodiments, a person of ordinary skill in the art should understand that they may still make modifications to the technical solutions described in the foregoing embodiments, without departing from the scope of protection as defined by the claims.

**Claims**

1. An energy storage system, wherein an output end of the energy storage system is configured to connect to an alternating current power grid (50), and the energy storage system comprises a battery cluster (10), a power conversion circuit (20), and a controller (100);

   an output end of the battery cluster (10) is connected to a first terminal of the power conversion circuit (20), and a second terminal of the power conversion circuit (20) is connected to the output end of the energy storage system;
   the power conversion circuit (20) is configured to: convert a direct current provided by the battery cluster (10) into an alternating current and then transmit the alternating current to the alternating current power grid (50), or convert an alternating current obtained from the second terminal of the power conversion circuit (20) into a direct current for charging the battery cluster (10), wherein the power conversion circuit (20) comprises a direct current/direct current conversion circuit (201) and a direct current/alternating current conversion circuit (202), wherein
a first terminal of the direct current/direct current conversion circuit (201) is the first terminal of the power conversion circuit (20), a second terminal of the direct current/direct current conversion circuit (201) is connected to a first terminal of the direct current/alternating current conversion circuit (202), and a second terminal of the direct current/alternating current conversion circuit (202) is the second terminal of the power conversion circuit (20);
the direct current/direct current conversion circuit (201) is configured to: perform direct current conversion on the direct current provided by the battery cluster (10) and then transmit a direct current obtained through direct current conversion to the direct current/alternating current conversion circuit (202), or perform direct current conversion on a direct current provided by the direct current/alternating current conversion circuit (202) and then transmit a direct current obtained through direct current conversion to the battery cluster (10);
the direct current/alternating current conversion circuit (202) is configured to: convert a direct current provided by the direct current/direct current conversion circuit (201) into an alternating current, or convert the obtained alternating current into a direct current and then transmit a direct current obtained through conversion to the direct current/direct current conversion circuit (201);
the battery cluster (10) comprises at least two energy storage modules (10a) connected in series, each energy storage module (10a) comprises one bypass circuit (101b) and one battery pack (101a), and each battery pack (101a) comprises a plurality of batteries; and
the controller (100) is configured to control each bypass circuit (101b) based on a first parameter value of each battery pack (101a), so that electricity quantities of the battery packs (101a) are balanced, and the controller is further configured to: before bypassing the battery pack (101a) or connecting to the battery pack (101a), control the direct current/direct current conversion circuit (201) to stop working; and after the battery pack (101a) is bypassed or connected, control the direct current/direct current conversion circuit (201) to resume working.

2. The energy storage system according to claim 1, wherein the controller is specifically configured to: control, when the battery cluster is charged, each bypass circuit to bypass a battery pack whose first parameter value is greater than or equal to a first preset parameter value; or control, when the battery cluster is discharged, each bypass circuit to bypass a battery pack whose first parameter value is less than or equal to a second preset parameter value.

3. The energy storage system according to claim 2, wherein the bypass circuit comprises a first controllable switch and a second controllable switch; and a positive output end of the battery pack is connected to a first end of the first controllable switch, a second end of the first controllable switch is connected to a first end of the second controllable switch and a positive output end of the energy storage module, a second end of the second controllable switch is connected to a negative output end of the battery pack and a negative output end of the battery pack is connected to a negative output end of the energy storage module.

4. The energy storage system according to claim 3, wherein the controller is specifically configured to: first control both the first controllable switch and the second controllable switch to be open; and after a first preset time, control the second controllable switch to be closed, to bypass the battery pack.

5. The energy storage system according to claim 1, wherein the energy storage system further comprises a soft-start circuit, wherein a positive port of the output end of the battery cluster is connected to a positive port of the first terminal of the direct current/direct current conversion circuit through the soft-start circuit, or a negative port of the output end of the battery cluster is connected to a negative port of the first terminal of the direct current/direct current conversion circuit through the soft-start circuit, and the soft-start circuit comprises a first relay, a second relay, and a first resistor;

the first relay is connected to the first resistor in series and then connected to the second relay in parallel; and
the controller is further configured to: before bypassing the battery pack or connecting to the battery pack, control the first relay and the second relay to be open.

6. The energy storage system according to any one of claims 1 to 5, wherein the controller comprises a first controller and at least two second controllers;

the second controllers are connected to battery packs in a one-to-one correspondence;
the second controller is configured to: obtain a second parameter value of the corresponding battery pack, and send the second parameter value to the first controller; and
the first controller is configured to: determine first parameter values of all the battery packs based on second parameter values of all the battery packs; when the battery cluster is charged, determine the battery pack whose first parameter value is greater than or equal to the first preset parameter value as a to-be-bypassed battery pack; when the battery cluster is discharged, determine the battery pack whose first parameter value is less than or equal to the second preset parameter value as a to-be-bypassed battery pack; and send a control instruction to the second controller, wherein the control instruction instructs the corresponding second controller to control the bypass circuit to bypass the to-be-bypassed battery pack.

7. The energy storage system according to claim 6, wherein the second parameter value comprises a total capacity, and a state of energy, SOE, value, and a state of health, SOH, value of the battery pack, and the first parameter value is a state of charge, SOC, value.

8. The energy storage system according to any one of claims 1 to 7, wherein the controller comprises a first controller and at least two second controllers;

the second controllers are connected to battery packs in a one-to-one correspondence;
the second controller is configured to: obtain a first parameter value of the corresponding battery pack, and send the first parameter value to the first controller; and
the first controller is configured to: when the battery cluster is charged, determine the battery pack whose first parameter value is greater than or equal to the first preset parameter value as a to-be-bypassed battery pack; or when the battery cluster is discharged, determine the battery pack whose first parameter value is less than or equal to the second preset parameter value as a to-be-bypassed battery pack; and send a control instruction to the second controller, wherein the control instruction instructs the corresponding second controller to control the bypass circuit to bypass the to-be-bypassed battery pack.

9. The energy storage system according to claim 8, wherein the first parameter value is a voltage value or a state of charge, SOC, value.

10. A method for controlling an energy storage system according to any preceding claim, wherein the method comprises:

controlling each bypass circuit based on a first parameter value of each battery pack, so that electricity quantities of the battery packs are balanced;

before bypassing the battery pack or connecting to the battery pack, controlling the direct current/direct current conversion circuit to stop working; and

after completing bypassing or connecting to the battery pack, controlling a voltage at the first terminal of the direct current/direct current conversion circuit to be equal to an output voltage of the battery cluster, and controlling the direct current/direct current conversion circuit to start working.

11. The method for controlling an energy storage system according to claim 10, wherein the controlling each bypass circuit based on a first parameter value of each battery pack specifically comprises:

controlling, when the battery cluster is charged, each bypass circuit to bypass a battery pack whose first parameter value is greater than or equal to a first preset parameter value; and controlling, when the battery cluster is discharged, each bypass circuit to bypass a battery pack whose first parameter value is less than or equal to a second preset parameter value.

**Patentansprüche**

1. Energiespeichersystem, wobei ein Ausgangsende des Energiespeichersystems dazu konfiguriert ist, mit einem Wechselstromnetz (50) verbunden zu werden, und das Energiespeichersystem einen Batteriecluster (10), eine Leistungsumwandlungsschaltung (20) und eine Steuerung (100) umfasst;

ein Ausgangsende des Batterieclusters (10) mit einem ersten Endgerät der Leistungsumwandlungsschaltung (20) verbunden ist, und ein zweites Endgerät der Leistungsumwandlungsschaltung (20) mit dem Ausgangsende des Energiespeichersystems verbunden ist; die Leistungsumwandlungsschaltung (20) dazu konfiguriert ist: einen durch den Batteriecluster (10) bereitgestellten Gleichstrom in einen Wechselstrom umzuwandeln und danach den Wechselstrom an das Wechselstromnetz (50) zu übertragen, oder einen aus dem zweiten Endgerät der Leistungsumwandlungsschaltung (20) erlangten Wechselstrom in einen Gleichstrom zum Laden des Batterieclusters (10) umzuwandeln, wobei die Leistungsumwandlungsschaltung (20) eine Gleichstrom/Gleichstrom-Umwandlungsschaltung (201) und eine Gleichstrom/Wechselstrom-Umwandlungsschaltung (202) umfasst, wobei ein erstes Endgerät der Gleichstrom/Gleichstrom-Umwandlungsschaltung (201) das erste Endgerät der Leistungsumwandlungsschaltung (20) ist, ein zweites Endgerät der Gleichstrom/Gleichstrom-Umwandlungsschaltung (201) mit einem ersten Endgerät der Gleichstrom/Wechselstrom-Umwandlungsschaltung (202) verbunden ist, und ein zweites Endgerät der Gleichstrom/Wechselstrom-Umwandlungsschaltung (202) das zweite Endgerät der Leistungsumwandlungsschaltung (20) ist; die Gleichstrom/Gleichstrom-Umwandlungsschaltung (201) dazu konfiguriert ist: eine Gleichstromumwandlung an dem durch den Batteriecluster (10) bereitgestellten Gleichstrom durchzuführen und danach einen über eine Gleichstromumwandlung erlangten Gleichstrom an die Gleichstrom/Wechselstrom-Umwandlungsschaltung (202) zu übertragen, oder eine Gleichstromumwandlung an einem durch die Gleichstrom/Wechselstrom-Umwandlungsschaltung (202) bereitgestellten Gleichstrom durchzuführen und danach einen über Gleichstromumwandlung erlangten Gleichstrom an den Batteriecluster (10) zu übertragen; die Gleichstrom/Wechselstrom-Umwandlungsschaltung (202) dazu konfiguriert ist: einen durch die Gleichstrom/Gleichstrom-Umwandlungsschaltung (201) bereitgestellten Gleichstrom in einen Wechselstrom umzuwandeln oder den erlangten Wechselstrom in einen Gleichstrom umzuwandeln und danach einen über Umwandlung erlangten Gleichstrom an die Gleichstrom/Gleichstrom-Umwandlungsschaltung (201) zu übertragen; der Batteriecluster (10) mindestens zwei Energiespeichermodule (10a) umfasst, die in Reihe geschaltet sind, jedes Energiespeichermodul (10a) eine Bypass-Schaltung (101b) und ein Batteriepaket (101a) umfasst, und jedes Batteriepaket (101a) eine Vielzahl von Batterien umfasst; und die Steuerung (100) dazu konfiguriert ist, jede Bypass-Schaltung (101b) basierend auf einem ersten Parameterwert jedes Batteriepakets (101a) zu steuern, so dass die Elektrizitätsmengen der Batteriepakete (101a) ausgeglichen sind, und die Steuerung ferner dazu konfiguriert ist: die Gleichstrom/Gleichstrom-Umwandlungsschaltung (201) vor dem Umgehen des Batteriepakets (101a) oder dem Verbinden mit dem Batteriepaket (101a) zu steuern, um den Betrieb zu beenden; und nachdem das Batteriepaket (101a) umgangen oder verbunden ist, die Gleichstrom/Gleichstrom-Umwandlungsschaltung (201) zu steuern, um den Betrieb wiederaufzunehmen.

2. Energiespeichersystem nach Anspruch 1, wobei die Steuerung speziell dazu konfiguriert ist: wenn der Batteriecluster geladen ist, jede Bypass-Schaltung zu steuern, um ein Batteriepaket zu umgehen, dessen erster Parameterwert größer oder gleich einem ersten voreingestellten Parameterwert ist; oder, wenn der Batteriecluster entladen ist, jede Bypass-Schaltung zu steuern, um ein Batteriepaket zu umgehen, dessen erster Parameterwert kleiner oder gleich einem zweiten voreingestellten Parameterwert ist.

3. Energiespeichersystem nach Anspruch 2, wobei die Bypass-Schaltung einen ersten steuerbaren Schalter und einen zweiten steuerbaren Schalter umfasst; und

ein positives Ausgangsende des Batteriepacks mit einem ersten Ende des ersten steuerbaren Schalters verbunden ist, ein zweites Ende des ersten steuerbaren Schalters mit einem ersten Ende des zweiten steuerbaren Schalters und einem positiven Ausgangsende des Energiespeichermoduls verbunden ist, ein zweites Ende des zweiten steuerbaren Schalters mit einem negativen Ausgangsende des Batteriepacks verbunden ist und ein negatives Ausgangsende des Batteriepacks mit einem negativen Ausgangsende des Energiespeichermoduls verbunden ist.

4. Energiespeichersystem nach Anspruch 3, wobei die Steuerung speziell dazu konfiguriert ist: zunächst sowohl den ersten steuerbaren Schalter als auch den zweiten steuerbaren Schalter zu steuern, um geöffnet zu sein; und nach einer ersten voreingestellten Zeit den zweiten steuerbaren Schalter zu steuern, um geschlossen zu sein, um das Batteriepaket zu umgehen.

5. Energiespeichersystem nach Anspruch 1, wobei das Energiespeichersystem ferner eine Sanftanlaufschaltung umfasst, wobei ein positiver Anschluss des Ausgangsendes des Batterieclusters über die Sanftanlaufschaltung mit einem positiven Anschluss des ersten Endgeräts der Gleichstrom/Gleichstrom-Umwandlungsschaltung verbunden ist, oder ein negativer Anschluss des Ausgangsendes des Batterieclusters über die Sanftanlaufschaltung mit einem negativen Anschluss des ersten Endgeräts der Gleichstrom/Gleichstrom-Umwandlungsschaltung verbunden ist, und die Sanftanlaufschaltung ein erstes Relais, ein zweites Relais und einen ersten Widerstand umfasst;

das erste Relais mit dem ersten Widerstand in Reihe geschaltet und danach mit dem zweiten Relais parallel geschaltet ist; und die Steuerung dazu konfiguriert ist: vor dem Umgehen des Batteriepakets oder dem Verbinden mit dem Batteriepaket das erste Relais und das zweite Relais zu steuern, um geöffnet zu sein.

6. Energiespeichersystem nach einem der Ansprüche 1 bis 5, wobei die Steuerung eine erste Steuerung und mindestens zwei zweite Steuerungen umfasst;

die zweiten Steuerungen in einer Eins-zu-eins-Entsprechung mit Batteriepaketen verbunden sind; die zweite Steuerung dazu konfiguriert ist: einen zweiten Parameterwert des entsprechenden Batteriepacks zu erlangen und den zweiten Parameterwert an die erste Steuerung zu senden; und die erste Steuerung dazu konfiguriert ist: erste Parameterwerte aller Batteriepakete basierend auf zweiten Parameterwerten aller Batteriepakete zu bestimmen; wenn der Batteriecluster geladen ist, das Batteriepaket, dessen erster Parameterwert größer oder gleich dem ersten voreingestellten Parameterwert ist, als ein zu umgehendes Batteriepaket zu bestimmen; wenn der Batteriecluster entladen ist, das Batteriepaket, dessen erster Parameterwert kleiner oder gleich dem zweiten voreingestellten Parameterwert ist, als ein zu umgehendes Batteriepaket zu bestimmen; und eine Steueranweisung an die zweite Steuerung zu senden, wobei die Steueranweisung die entsprechende zweite Steuerung anweist, die Umgehungsschaltung zu steuern, um das zu umgehende Batteriepaket zu umgehen.

7. Energiespeichersystem nach Anspruch 6, wobei der zweite Parameterwert eine Gesamtkapazität, einen Energiezustandswert, SOE-Wert, und einen Gesundheitszustandswert, SOH-Wert, des Batteriepakets umfasst, und der erste Parameterwert ein Ladezustandswert, SOC-Wert, ist.

8. Energiespeichersystem nach einem der Ansprüche 1 bis 7, wobei die Steuerung eine erste Steuerung und mindestens zwei zweite Steuerungen umfasst;

die zweiten Steuerungen in einer Eins-zu-eins-Entsprechung mit Batteriepaketen verbunden sind; die zweite Steuerung dazu konfiguriert ist: einen ersten Parameterwert des entsprechenden Batteriepacks zu erlangen und den ersten Parameterwert an die erste Steuerung zu senden; und die erste Steuerung dazu konfiguriert ist: wenn der Batteriecluster geladen ist, das Batteriepaket, dessen erster Parameterwert größer oder gleich dem ersten voreingestellten Parameterwert ist, als ein zu umgehendes Batteriepaket zu bestimmen; oder, wenn der Batteriecluster entladen ist, das Batteriepaket, dessen erster Parameterwert kleiner oder gleich dem zweiten voreingestellten Parameterwert ist, als ein zu umgehendes Batteriepaket zu bestimmen;

und eine Steueranweisung an die zweite Steuerung zu senden, wobei die Steueranweisung die entsprechende zweite Steuerung anweist, die Umgehungsschaltung zu steuern, um das zu umgehende Batteriepaket zu umgehen.

9. Energiespeichersystem nach Anspruch 8, wobei der erste Parameterwert ein Spannungswert oder ein Ladezustandswert, SOC-Wert, ist.

10. Verfahren zum Steuern eines Energiespeichersystems nach einem der vorhergehenden Ansprüche, wobei das Verfahren Folgendes umfasst:

Steuern jeder Bypass-Schaltung basierend auf einem ersten Parameterwert jedes Batteriepakets, so dass Elektrizitätsmengen der Batteriepakete ausgeglichen sind;
vor dem Umgehen des Batteriepakets oder dem Verbinden an das Batteriepaket, Steuern der Gleichstrom/Gleichstrom-Umwandlungsschaltung, um den Betrieb zu beenden; und
nach dem Beenden des Umgehens des oder Verbindens mit dem Batteriepaket, Steuern einer Spannung an dem ersten Endgerät der Gleichstrom/Gleichstrom-Umwandlungsschaltung, um gleich einer Ausgangsspannung des Batterieblocks zu sein, und Steuern der Gleichstrom/Gleichstrom-Umwandlungsschaltung, um den Betrieb aufzunehmen.

11. Verfahren zur Steuerung eines Energiespeichersystems nach Anspruch 10, wobei die Steuerung jeder Bypass-Schaltung basierend auf einem ersten Parameterwert jedes Batteriepakets insbesondere Folgendes umfasst:

Steuern jeder Bypass-Schaltung, um ein Batteriepaket zu umgehen, dessen erster Parameterwert größer oder gleich einem ersten voreingestellten Parameterwert ist, wenn der Batteriecluster entladen wird; und
Steuern jeder Bypass-Schaltung, um ein Batteriepaket zu umgehen, dessen erster Parameterwert kleiner oder gleich einem zweiten voreingestellten Parameterwert ist, wenn der Batteriecluster geladen wird.

## Revendications

1. Système de stockage d'énergie, dans lequel une extrémité de sortie du système de stockage d'énergie est configurée pour se connecter à un réseau électrique à courant alternatif (50), et le système de stockage d'énergie comprend un groupe de batteries (10), un circuit de conversion de puissance (20), et un dispositif de commande (100) ;

une extrémité de sortie du groupe de batteries (10) est connectée à une première borne du circuit de conversion de puissance (20), et une seconde borne du circuit de conversion de puissance (20) est connectée à l'extrémité de sortie du système de stockage d'énergie ;
le circuit de conversion de puissance (20) est configuré pour : convertir un courant continu fourni par le groupe de batteries (10) en un courant alternatif puis transmettre le courant alternatif au réseau électrique à courant alternatif (50), ou convertir un courant alternatif obtenu à partir de la seconde borne du circuit de conversion de puissance (20) en un courant continu pour charger le groupe de batteries (10), dans lequel le circuit de conversion de puissance (20) comprend un circuit de conversion courant continu/courant continu (201) et un circuit de conversion courant continu/courant alternatif (202), dans lequel
une première borne du circuit de conversion courant continu/courant continu (201) est la première borne du circuit de conversion de puissance (20), une seconde borne du circuit de conversion courant continu/courant continu (201) est connectée à une première borne du circuit de conversion courant continu/courant alternatif (202), et une seconde borne du circuit de conversion courant continu/courant alternatif (202) est la seconde borne du circuit de conversion de puissance (20) ;
le circuit de conversion courant continu/courant continu (201) est configuré pour : réaliser une conversion de courant continu sur le courant continu fourni par le groupe de batteries (10) puis transmettre un courant continu obtenu par conversion de courant continu au circuit de conversion courant continu/courant alternatif (202), ou réaliser une conversion de courant continu sur un courant continu fourni par le circuit de conversion courant continu/courant alternatif (202) puis transmettre un courant continu obtenu par conversion de courant continu au groupe de batteries (10) ;
le circuit de conversion courant continu/courant alternatif (202) est configuré pour : convertir un courant continu fourni par le circuit de conversion courant continu/courant continu (201) en un courant alternatif, ou convertir le courant alternatif obtenu en un courant continu puis transmettre un courant continu obtenu par conversion au circuit de conversion courant continu/courant continu (201) ;
le groupe de batteries (10) comprend au moins deux modules de stockage d'énergie (10a) connectés en série, chaque module de stockage d'énergie (10a) comprend un circuit de dérivation (101b) et un bloc de batteries (101a), et chaque bloc de batteries (101a) comprend une pluralité de batteries ; et le dispositif de commande (100) est configuré pour commander chaque circuit de dérivation (101b) sur la base d'une première valeur de paramètre de chaque bloc de batteries (101a), de sorte que les quantités d'électricité des blocs de batteries (101a) sont équilibrées, et le dispositif de commande est en outre configuré pour : avant de dériver le bloc de batteries (101a) ou de se connecter au bloc de batteries (101a), commander le circuit de conversion courant continu/courant continu (201) pour qu'il s'arrête de fonctionner ; et après que le bloc de batteries (101a) est dérivé ou connecté, commander le circuit de conversion courant continu/courant continu (201) pour qu'il reprenne son fonctionnement.

2. Système de stockage d'énergie selon la revendication 1, dans lequel le dispositif de commande est spécifiquement configuré pour : commander, lorsque le groupe de batteries est chargé, chaque circuit de dérivation pour dériver un bloc de batteries dont la première valeur de paramètre est supérieure ou égale à une première valeur de paramètre prédéfinie ; ou commander, lorsque le groupe de batteries est déchargé, chaque circuit de dérivation pour dériver un bloc de batteries dont la première valeur de paramètre est inférieure ou égale à une seconde valeur de paramètre prédéfinie.

3. Système de stockage d'énergie selon la revendication 2, dans lequel le circuit de dérivation comprend un premier interrupteur commandable et un second interrupteur commandable ; et une extrémité de sortie positive du bloc de batteries est connectée à une première extrémité du premier interrupteur commandable, une seconde extrémité du premier interrupteur commandable est connectée à une première extrémité du second interrupteur commandable et à une extrémité de sortie positive du module de stockage d'énergie, une seconde extrémité du second interrupteur commandable est connectée à une extrémité de sortie négative du bloc de batteries et une extrémité de sortie négative du bloc de batteries est connectée à une extrémité de sortie négative du module de stockage d'énergie.

4. Système de stockage d'énergie selon la revendication 3, dans lequel le dispositif de commande est spécifiquement configuré pour : commander d'abord l'ouverture du premier interrupteur commandable et du second interrupteur commandable ; et après un premier temps prédéfini, commander la fermeture du second interrupteur commandable, pour dériver le bloc de batteries.

5. Système de stockage d'énergie selon la revendication 1, dans lequel le système de stockage d'énergie comprend en outre un circuit de démarrage progressif, dans lequel un port positif de l'extrémité de sortie du groupe de batteries est connecté à un port positif de la première borne du circuit de conversion courant continu/courant continu via le circuit de démarrage progressif, ou un port négatif de l'extrémité de sortie du groupe de batteries est connecté à un port négatif de la première borne du circuit de conversion courant continu/courant continu via le circuit de démarrage progressif, et le circuit de démarrage progressif comprend un premier relais, un second relais, et une première résistance ;

le premier relais est connecté à la première résistance en série, puis connecté au second relais en parallèle ; et le dispositif de commande est en outre configuré pour : avant de dériver le bloc de batteries ou de se connecter au bloc de batteries, commander l'ouverture du premier relais et du second relais.

6. Système de stockage d'énergie selon l'une quelconque des revendications 1 à 5, dans lequel le dispositif de commande comprend un premier dispositif de commande et au moins deux seconds dispositifs de commande ;

les seconds dispositifs de commande sont connectés à des blocs de batteries en correspondance biunivoque ; le second dispositif de commande est configuré pour : obtenir une seconde valeur de paramètre du bloc de batteries correspondant, et envoyer la seconde valeur de paramètre au premier dispositif de commande ; et le premier dispositif de commande est configuré pour : déterminer de premières valeurs de paramètres de tous les blocs de batteries sur la base de secondes valeurs de paramètres de tous les blocs de batteries ; lorsque le groupe de batteries est chargé, déterminer le bloc de batteries dont la première valeur de paramètre est supérieure ou égale à la première valeur de paramètre prédéfinie comme bloc de batteries à dériver ; lorsque le groupe de batteries est déchargé, déterminer le bloc de batteries dont la première valeur de paramètre est inférieure ou égale à la seconde valeur de paramètre prédéfinie comme bloc de batteries à dériver ; et envoyer une instruction de commande au second dispositif de commande, dans lequel l'instruction de commande ordonne au second dispositif de commande correspondant de commander le circuit de dérivation pour dériver le bloc de batteries à dériver.

**7.** Système de stockage d'énergie selon la revendication 6, dans lequel la seconde valeur de paramètre comprend une capacité totale, et une valeur d'état d'énergie, SOE, et une valeur d'état de santé, SOH, du bloc de batteries, et la première valeur de paramètre est une valeur d'état de charge, SOC.

**8.** Système de stockage d'énergie selon l'une quelconque des revendications 1 à 7, dans lequel le dispositif de commande comprend un premier dispositif de commande et au moins deux seconds dispositifs de commande ;

les seconds dispositifs de commande sont connectés à des blocs de batteries en correspondance biunivoque ;
le second dispositif de commande est configuré pour : obtenir une première valeur de paramètre du bloc de batteries correspondant, et envoyer la première valeur de paramètre au premier dispositif de commande ; et
le premier dispositif de commande est configuré pour : lorsque le groupe de batteries est chargé, déterminer le bloc de batteries dont la première valeur de paramètre est supérieure ou égale à la première valeur de paramètre prédéfinie comme bloc de batteries à dériver ; ou lorsque le groupe de batteries est déchargé, déterminer le bloc de batteries dont la première valeur de paramètre est inférieure ou égale à la seconde valeur de paramètre prédéfinie comme bloc de batteries à dériver ; et envoyer une instruction de commande au second dispositif de commande, dans lequel l'instruction de commande ordonne au second dispositif de commande correspondant de commander le circuit de dérivation pour dériver le bloc de batteries à dériver.

**9.** Système de stockage d'énergie selon la revendication 8, dans lequel la première valeur de paramètre est une valeur de tension ou une valeur d'état de charge, SOC.

**10.** Procédé de commande d'un système de stockage d'énergie selon une quelconque revendication, dans lequel le procédé comprend :

la commande de chaque circuit de dérivation sur la base d'une première valeur de paramètre de chaque bloc de batteries, de sorte que les quantités d'électricité des blocs de batteries sont équilibrées ;
avant de dériver le bloc de batteries ou de se connecter au bloc de batteries, la commande du circuit de conversion courant continu/courant continu pour qu'il s'arrête de fonctionner ; et
après la dérivation du ou la connexion au bloc de batteries, la commande d'une tension à la première borne du circuit de conversion courant continu/courant continu pour qu'elle soit égale à une tension de sortie du groupe de batteries, et la commande du circuit de conversion courant continu/courant continu pour qu'il démarre.

**11.** Procédé de commande d'un système de stockage d'énergie selon la revendication 10, dans lequel la commande de chaque circuit de dérivation sur la base d'une première valeur de paramètre de chaque bloc de batteries comprend spécifiquement :

la commande, lorsque le groupe de batteries est chargé, de chaque circuit de dérivation pour dériver un bloc de batteries dont la première valeur de paramètre est supérieure ou égale à une première valeur de paramètre prédéfinie ; et
la commande, lorsque le groupe de batteries est déchargé, de chaque circuit de dérivation pour dériver un bloc de batteries dont la première valeur de paramètre est inférieure ou égale à une seconde valeur de paramètre prédéfinie.

FIG. 1

FIG. 2

FIG. 3

FIG. 4

```
   ┌──────────┐   ┌──────────┐   ┌─────────────────────────────────────────────────┐   ┌──────────┐
   │   100    │   │    10    │   │   20                                            │   │    50    │
   │          │   │          │   │   ┌──────────────┐   ┌──────────────┐           │   │          │
   │          │   │          │   │   │    201       │   │    202       │           │   │          │
   │          │   │          │   │   │              │   │              │           │   │ Alternating│
   │Controller│───│  Battery │───│   │Direct current/│  │Direct current/│          │───│  current │
   │          │   │  cluster │   │   │Direct current│───│ Alternating  │           │   │  power   │
   │          │   │          │   │   │  conversion  │   │   current    │           │   │   grid   │
   │          │   │          │   │   │   circuit    │   │  conversion  │           │   │          │
   │          │   │          │   │   │              │   │   circuit    │           │   │          │
   │          │   │          │   │   └──────────────┘   └──────────────┘           │   │          │
   └──────────┘   └──────────┘   └─────────────────────────────────────────────────┘   └──────────┘
```

FIG. 5

```
   ┌──────────┐   ┌────────┐   ┌──────────┐   ┌─────────────────────────────────────────────┐   ┌──────────┐
   │   100    │   │   10   │   │   60     │   │   20                                        │   │    50    │
   │          │   │        │   │ K1   R1  │   │   ┌──────────┐   ┌──────────┐               │   │          │
   │          │   │        │   │  ─o o─/\/\│   │   │   201    │   │   202    │               │   │Alternating│
   │          │   │        │   │          │   │   │  Direct  │   │  Direct  │               │   │  current │
   │Controller│───│ Battery│───│    K2    │───│   │ current/ │───│ current/ │               │───│  power   │
   │          │   │ cluster│   │  ─o o─── │   │   │  Direct  │   │Alternating│              │   │   grid   │
   │          │   │        │   │          │   │   │ current  │   │  current │               │   │          │
   │          │   │        │   │          │   │   │conversion│   │conversion│               │   │          │
   │          │   │        │   │          │   │   │ circuit  │   │ circuit  │               │   │          │
   │          │   │        │   │          │   │   └──────────┘   └──────────┘               │   │          │
   └──────────┘   └────────┘   └──────────┘   └─────────────────────────────────────────────┘   └──────────┘
```

FIG. 6

S701

Start

No

S702

Determine
whether a battery pack
reaches a charging-
completed state

No

S703

Determine
whether the battery pack
reaches a discharging-
completed state

Yes

S704

Set a charging-completed flag for the
battery pack

Yes

S705

Set a discharging-completed flag for the
battery pack

S706

End

FIG. 7

S801

Start

S802

Determine
whether a battery pack is in a
charging state

No

Yes

Detect a next battery pack — S807

S812 — Detect a next battery pack

No

No

S806

Determine
whether detection of
all battery packs is
completed

No

S803

Whether
charging of the
current battery pack is
completed

S804

Whether
discharging of the
current battery pack is
completed

No

S811

Determine
whether detection
of all battery packs
is completed

Yes

Yes

TO
FIG. 8B

TO
FIG. 8B

TO
FIG. 8B

TO
FIG. 8B

FIG. 8A

CONT.
FROM
FIG. 8A

CONT.
FROM
FIG. 8A

CONT.
FROM
FIG. 8A

CONT.
FROM
FIG. 8A

S805

Determine
whether a quantity
of remaining battery packs
that are not bypassed
is greater
than 1

No

Yes

S810

Determine
whether a quantity
of remaining battery packs
that are not bypassed
is greater
than 1

No

Yes

S809

Control each bypass
circuit, so that a
bypassed battery
pack reconnects to
a battery cluster

S808

Bypass a battery pack
whose first parameter
value is greater than or
equal to a first preset
parameter value

S813

Bypass a battery pack
whose first parameter
value is less than or equal
to a second preset
parameter value

S814

Control each bypass
circuit, so that a
bypassed battery
pack reconnects to
a battery cluster

S815

End

FIG. 8B

EP 4 304 042 B1

S901

Before bypassing a battery pack or connecting to a battery pack, control a direct current/direct current conversion circuit connected to an output end of a battery cluster to stop working, where a first terminal of the direct current/direct current conversion circuit is connected to the output end of the battery cluster

S902

After completing bypassing or connecting to the battery pack, control a voltage at the first terminal of the direct current/direct current conversion circuit to be equal to an output voltage of the battery cluster

S903

Control a second relay K2 to be closed

FIG. 9

S1001

Before bypassing a battery pack or connecting to a battery pack, control a direct current/direct current conversion circuit connected to an output end of a battery cluster to stop working, and control both a first relay K1 and a second relay K2 to be open, where a first terminal of the direct current/direct current conversion circuit is connected to the output end of the battery cluster

S1002

Control the first relay K1 to be closed and the second relay K2 to be open; and after a third preset time, control the first relay K1 to be open and the second relay K2 to be closed

FIG. 10

301

Photovoltaic power
generation end

100　　　　　10　　　　　20　　　　　50

| Controller | Battery cluster | Power conversion circuit | Alternating current power grid |

FIG. 11

100　　　　　10　　　　　20　　　　　50

| Controller | Battery cluster | Power conversion Circuit | Alternating current power grid |

80

Photovoltaic module

FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018123357 A1
- CN 108155657 B

- EP 2980954 B1